Europäisches Patentamt

European Patent Office

Office européen des brevets

(19)

(11) **EP 0 891 100 A1**

(12) **EUROPEAN PATENT APPLICATION**

(43) Date of publication:
**13.01.1999 Bulletin 1999/02**

(51) Int Cl.6: **H04N 7/26**, H04N 7/36, H04N 7/30

(21) Application number: **98401708.7**

(22) Date of filing: **06.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.07.1997 FR 9708647**
**08.07.1997 FR 9708648**

(71) Applicant: **CANON KABUSHIKI KAISHA**
**Tokyo (JP)**

(72) Inventors:
• Amonou, Isabelle
  35235 Thorigne-Fouillard (FR)
• Henry, Félix
  35700 Rennes (FR)

(74) Representative: **Rinuy, Santarelli**
14, avenue de la Grande Armée,
B.P. 237
75822 Paris Cédex 17 (FR)

(54) **Method and device for coding and decoding data, notably digital images and sequences of digital images**

(57)     A method of coding a set of data representing physical quantities, the said set being composed of sub-sets $(f_n)$, is characterised in that it includes, for each of the sub-sets, the steps of dividing (E2) the sub-set into blocks of data to be coded $(A_{n,m})$, and dividing (E6) at least one reference sub-set $(g_{n-1})$ into source blocks, and then, for each of the blocks of data to be coded, the steps of selecting (E7) a predetermined number of source blocks $(D_{n-1m,1}, D_{n-1,m,K})$, from the said at least one reference sub-set, and determining (E8) a transformation $(T_{n,m})$ between the source blocks selected and the block to be coded. The invention applies to the coding of image sequences.

Fig. 9

## Description

The present invention concerns, in general terms, a method and device for coding data, and a method and device for decoding data. Data coding and decoding relates in particular to compressing and decompressing sets of data.

A set of compressed data can be stored to memory occupying memory space which is small compared with the initial uncompressed set, or can be transmitted more rapidly, or with a lower transmission speed, than the uncompressed initial set.

These data are in principle any data and represent physical quantities. In preferred applications, sets of data are considered which are sequences or series of images, sound or other mono or multidimensional signals. Hereinafter, coding and decoding of digital images and sequences of digital images will be considered in particular, since images are known on the one hand to occupy a large amount of memory space and on the other hand to require a high transmission speed, or a large amount of transmission time, when it is desired to transmit them.

As far as image sequences are concerned, many methods of coding image sequences exist at the present time. A first type of method is the so-called MPEG (Motion Picture Expert Group) coding which consists overall of coding images with respect to one or more other images selected from the sequence, referred to as reference images, and periodically an image with respect to itself.

An image coded with respect to itself, referred to as an « intra » image, is divided into blocks, which are coded by discreet cosine transformation (DCT). These images are necessary for refreshing and allow random access in the sequence; however, the degree of compression of these images is low.

An image coded with respect to one or more other images is also divided into blocks. Each block is coded by means of an estimation and movement compensation mechanism with respect to a block which needs to be sought in the reference images, and then the error is coded by discreet cosine transformation. The « best » block for coding the current block is generally sought in a window of the reference image, in order to reduce the search time which, otherwise, could be too long. However, this type of coding remains fairly slow.

In addition, this type of coding is not suitable for low transmission speeds, of around few tens of kilobits, but is limited to speeds generally greater than 1.5 Megabits per second.

A second type of image sequence coding consists of coding a current image in the sequence with respect to the previous image. The current image is divided into blocks. For each block to be coded, a single block in a dictionary consisting of the blocks of the previous image is sought, having undergone transformation such as rotation, or symmetry. A linear transformation is then calculated between the current block and the reference block.

These two types of coding method have, as a common point, seeking, for each block to be coded, a reference block in a set of blocks, which takes a relatively long time.

In addition, the second type of coding entails decoding by iteration of each coded block, which there again requires a relatively long time.

As far as still, or fixed, images are concerned, many image coding methods exist at present. Among these, progressive coding methods code the data progressively, for example by successive iterations, and the coding accuracy increases with the coding iterations.

Progressive coding of the data enables progressive transmission of the coded data. In the case of an image, it is possible to construct, in the process of transmission of the image, an approximate version of the transmitted image. The approximate version is constructed from the data already received without waiting until all the data relating to the image have been transmitted. The received image is gradually improved as the data are transmitted.

Progressive transmission enables a user to quickly display the approximate version of the image. The user can interrupt the transmission in progress if the approximate version of the image is sufficient or on the contrary if the image is not the one desired.

For example, JPEG (Joint Picture Expert Group) coding is a method of block coding based on discrete cosine transformations, followed by compression by quantification and variable length coding. JPEG coding can be progressive according to a specific so-called HJPEG (Hierarchic Joint Picture Expert Group) mode.

HJPEG coding is relatively long and complex to implement, since it is based on transformation calculations, in this case discrete cosine transformation. Likewise, the decoding requires calculations of the same complexity and length.

The present invention aims to remedy the drawbacks of the prior art by providing a method and device for coding data, and the corresponding decoding method and device, having a high degree of data compression, whilst being fast in coding and decoding.

The invention is situated in the field of coding and decoding with losses of digital image and digital image sequences by blocks.

As far as images sequences are concerned, the invention is based on the principal of coding each image in sequence as a function of at least one reference image.

The invention proposes a method of coding a set of data representing physical quantities, the said set being composed of sub-sets,

characterised in that it includes, for each of the sub-sets, the steps of:

- dividing the sub-set into blocks of data to be coded,

- dividing at least one reference sub-set into source blocks,

then, for each of the blocks of data to be coded, the steps of:

- selecting a predetermined number of source blocks in the said at least one reference sub-set,
- determining a transformation between the source blocks selected and the block to be coded.

Correlatively, the invention proposes a device for coding a set of data representing physical quantities, the said set being composed of sub-sets, characterised in that it has:

- means of dividing the sub-sets into blocks of data to be coded,
- means of dividing at least one reference sub-set into source blocks, for each of the sub-sets,
- means of selecting a predetermined number of source blocks from the said at least one reference sub-set, for each of the blocks of data to be coded in each of the sub-sets, and
- means of determining a transformation between the selected source blocks and the block to be coded.

The invention makes it possible to obtain a high degree of compression of the data, which can then be transmitted at a low transmission speed, of around a few tens of kilobits per second, whilst offering good quality of reconstruction of the data.

The invention affords rapid compression and decompression of the data.

The invention applies both to cases where both a rapid compression and a rapid decompression of an image sequence is desired, and in a case where only a rapid decompression is desired.

According to a preferred embodiment, the method also includes the step of seeking whether the block to be coded can be coded by block matching, and seeking a transformation only if a matching criterion is not satisfied. Coding by block matching requires few bits for storing and/or transmitting the coded block.

The matching criterion includes a measurement of a first distance between the block to be coded and the source block, which constitutes a simple means of implementing this aspect of the invention.

In another preferred embodiment of the invention, the method includes, for each of the sub-sets, the additional steps of:

- dividing the sub-set into zones,
- determining the type of each zone, amongst a first type of zone and a second type of zone, according to a zone criterion,
- dividing each zone of the second type into blocks of data to be coded. The zones of the second type are then coded by block, as disclosed above.

The method includes the calculation of a second distance between each zone and a corresponding zone in an adjacent sub-set, the zone criterion consists of comparing this distance with a threshold and, if this distance is less than the threshold, the zone in question is of the first type, and of the second type otherwise. Thus, the zones of the first type are zones which remain unchanged from one sub-set to the other. These zones are coded by means of another coding method, or are copied from one sub-set to the other, without being coded. Zones which remain unchanged in several sub-sets are coded only once, for the first of the sub-sets in question, and are then copied for the following sub-sets, which is fast and requires few bits for storing and/or transmitting these zones. Decoding is also rapid.

Where the set of data to be coded is a sequence of digital images, the zones of the first type are coded by a fixed image coding method.

In another aspect, the transformation is determined so as to minimise a third distance between the block to be coded and its approximation calculated by applying the transformation to the selected source blocks. The calculation of the third distance includes the calculation of a difference, for example the root mean square error, between the values of the data in the block to be coded and the values of its approximation calculated by applying the transformation to the source blocks.

According to preferred characteristics, the transformation is a multilinear approximation, or the transformation is a multilinear approximation combined with a geometric transformation, or again the transformation is a polynomial on the values of the coefficients of the source blocks. The type of transformation is chosen according to the coding precision, the coding speed and the desired degree of compression.

According to preferred characteristics:

- for the first sub-set to be coded, the said at least one reference sub-set is a predetermined sub-set,
- the said at least one reference sub-set is a sub-set of the set, which was preferably coded beforehand and then decoded.

According to other preferred characteristics:

- at least two reference sub-sets are considered, where at least a first one is situated amongst the sub-sets preceding the sub-set in the course of coding and at least a second one is situated amongst the sub-sets following the sub-set in the course of coding,
- the source blocks are selected from a part of the reference sub-set which depends on the part in which is situated the block to be coded in the sub-set in the course of coding,

- the source blocks have a size which is determined as a function of the size of the block to be coded,
- the source blocks have a size which is a multiple by a factor $F^2$ of that of the block to be coded and are sub-sampled by the factor F, where F is an integer, or the source blocks have the same size as the block to be coded, which is simpler to effect.

According to other preferred characteristics:

- the block to be coded is of predetermined size, or
- the block to be coded is of variable size, as a function of a size criterion.

In the latter case, the method includes the calculation of a fourth distance between the block to be coded and the approximation calculated by applying the transformation to the source blocks, the size criterion consists of comparing the fourth distance with a threshold, and, if the fourth distance is greater than the threshold, and if a minimum block size has not been reached, the block in the course of coding is divided into blocks of smaller size.

The coding device includes means adapted to implement the previously disclosed characteristics.

These means are incorporated in:

- a controller,
- a read only memory including a program for coding each of the data blocks, and
- a random access memory including registers adapted to record variables modified during the running of the said program.

The invention also concerns a method of decoding a set of data representing physical quantities, the set being composed of sub-sets which each include coded representations of data blocks, each of the blocks being coded by means of a transformation between source blocks selected in at least one reference sub-set and the block,
     characterised in that it includes, for each of the blocks of each of the sub-sets to be decoded, the step of applying the transformation to the source blocks in order to decode the block.

In a preferred embodiment, the decoding method includes, for each of the blocks of each of the sub-sets to be decoded, the steps of:

- seeking whether the block is coded by block matching,

and, in the case of a negative response, the block being then coded by means of a transformation between source blocks selected from at least one reference sub-set and the block:

- applying the transformation to the source blocks in order to decode the block.

In the case of a positive response to the search step, the block is decoded by copying a matched block determined by block matching. Decoding the block in question is therefore very simple and fast.

According to a preferred characteristic, the decoding method includes reading the size and position of the blocks to be decoded, when the blocks are of variable size.

In another aspect, the invention concerns a method of decoding a set of data representing physical quantities, the set being composed of sub-sets which each include coded representations of zones belonging to a first or a second type of zone, the coded representations of the second type of zone being effected by blocks of data,
     characterised in that it includes, for each of the blocks of zones of the second type of each of the sub-sets to be decoded, the step of applying the transformation to the source blocks in order to decode the block.

The invention also concerns a decoding device having means adapted to implement the characteristics previously disclosed. These means are incorporated in:

- a controller,
- a read only memory including a program for decoding each of the data blocks, and
- a random access memory including registers adapted to record variables modified during the running of the said program.

The same procedures are applied to still images. As far as still images are concerned, the invention proposes a method of coding a set of data representing physical quantities,
     characterised in that it includes the step of:

- dividing the set into blocks of data to be coded,

then the following steps, carried out iteratively a predetermined number of times:

- constructing a reference set,
- dividing the reference set into source blocks, and, for each block of data to be coded:

     - selecting a predetermined number of source blocks from the said reference set,
     - determining a transformation between the selected source blocks and the block to be coded.

Correlatively, the invention proposes a device for coding a set of data representing physical quantities,
     characterised in that it has:

- means of dividing the set into blocks of data to be coded,

- means of constructing a reference set,
- means of dividing the reference set into source blocks,
- means of selecting a predetermined number of source blocks from each reference set, for each block of data to be coded, and
- means of determining a transformation between the selected source blocks and the block to be coded.

The invention belongs in the field of progressive coding and decoding with losses of data, notably digital images. The coding is carried out per block.

The invention enables rapid compression and decompression of data. The invention is more particularly intended for the transmission of compressed data. In this context, the method also includes the step of transmitting the transformation determined for each data block.

According to a preferred characteristic, a search is effected, for each block of data to be coded, as to whether a matching of the block to be coded with one of the source blocks meets a matching criterion. The block is then coded by means of a transformation only if the criterion is not satisfied. Coding by block matching is quick and requires few bits. The decoding is also very quick.

The matching criterion of the matching step consists of a measurement of a first distance between the block to be coded and the source block. This type of criterion is simple to implement.

According to another preferred characteristic, a set of data to be coded is constructed at each coding iteration, prior to the actual coding.

At the first iteration, this set is constructed by subtraction of a mean of the set of data representing physical quantities from the said set of data representing physical quantities.

From the second iteration, this set is constructed by subtraction of the set to be coded at the preceding iteration from a set of data reconstructed from the transformations determined at the preceding iteration.

Thus the set of data to be coded at each iteration is the result of a difference. For example, in the case of an image, a difference image is generally coded with a greater accuracy than the original image.

Other preferred characteristics are similar to those previously described.

In another aspect, the invention proposes a method of decoding a set of coded data representing physical quantities, the set of data being coded by a series of coding sets which each consist of coded representations of data blocks, each block being coded by means of a transformation between source blocks selected from a reference set and the block,

characterised in that it includes, for each coding set successively and for each block, the step of applying the transformation to the source blocks in order to decode the block.

Where the coding was performed on sets constructed by differences, the decoding method also includes, for the first iteration, the addition of a mean to the set resulting from application of the transformation to the source blocks for each of the blocks, and, from the second iteration, the addition of the set resulting from the decoding at the preceding iteration and the set resulting from application of the transformation to the source blocks for each of the blocks.

The present invention also concerns a data processing device, a communication device, such as computer, printer or facsimile apparatus, including the preceding coding device, or the preceding decoding device.

The present invention also concerns a storage medium, such as a floppy disk or a CD-ROM.

The advantages of these devices and storage medium are similar to those previously described.

The characteristics and advantages of the present invention will emerge more clearly from a reading of the preferred embodiment illustrated by the accompanying drawings, in which:

- Figure 1 depicts schematically a data coding device according to the invention,
- Figure 2 depicts schematically a data decoding device according to the invention,
- Figure 3 depicts an embodiment of the data coding device according to the invention,
- Figure 4 depicts an embodiment of the data decoding device according to the invention,
- Figure 5 is a data coding algorithm according to a first embodiment of the invention,
- Figure 6 is an image divided into blocks during its coding according to the invention,
- Figure 7 is an image divided into blocks during its coding according to the invention,
- Figures 8a to 8f depict blocks to be coded and associated source blocks,
- Figure 9 is a data decoding algorithm according to the first embodiment of the invention,
- Figure 10 is a data coding algorithm according to a second embodiment of the invention,
- Figure 11 is an image divided into blocks during its coding according to the invention,
- Figure 12 is a division tree associated with the image of Figure 11,
- Figure 13 is a data decoding algorithm according to the second embodiment of the invention,
- Figure 14 is a data coding algorithm according to a third embodiment of the invention,
- Figure 15 is a data decoding algorithm according to the third embodiment of the invention,
- Figure 16 is data coding algorithm according to a fourth embodiment of the invention,
- Figure 17 is an image divided into zones during its coding according to the fourth embodiment of the invention,
- Figure 18 is a data decoding algorithm according to the fourth embodiment of the invention,

- Figure 19 is an algorithm for coding data according to a fifth embodiment of the invention,
- Figure 20 depicts schematically coding iterations according to the invention,
- Figure 21 is an image divided into blocks during its coding according to the invention,
- Figure 22 is an image divided into blocks during its coding according to the invention,
- Figures 23a to 23f depict blocks to be coded and associated source blocks,
- Figure 24 is an algorithm for decoding data according to the fifth embodiment of the invention,
- Figure 25 depicts schematically decoding iterations according to the invention,
- Figure 26 is an algorithm for coding data according to a sixth embodiment of the invention,
- Figure 27 depicts schematically coding iterations according to the sixth embodiment of the invention,
- Figure 28 depicts schematically decoding iterations according to the sixth embodiment of the invention,
- Figure 29 is an algorithm for coding data according to a seventh embodiment of the invention,
- Figure 30 is an algorithm for decoding data according to the seventh embodiment of the invention,
- Figure 31 is an algorithm for coding data according to a eighth embodiment of the invention,
- Figure 32 depicts schematically one step of the algorithm of Figure 31,
- Figure 33 depicts schematically coding iterations according to the eighth embodiment of the invention,
- Figure 34 is an algorithm for decoding data according to the eighth embodiment of the invention, and
- Figure 35 depicts schematically decoding iterations according to the eighth embodiment of the invention.

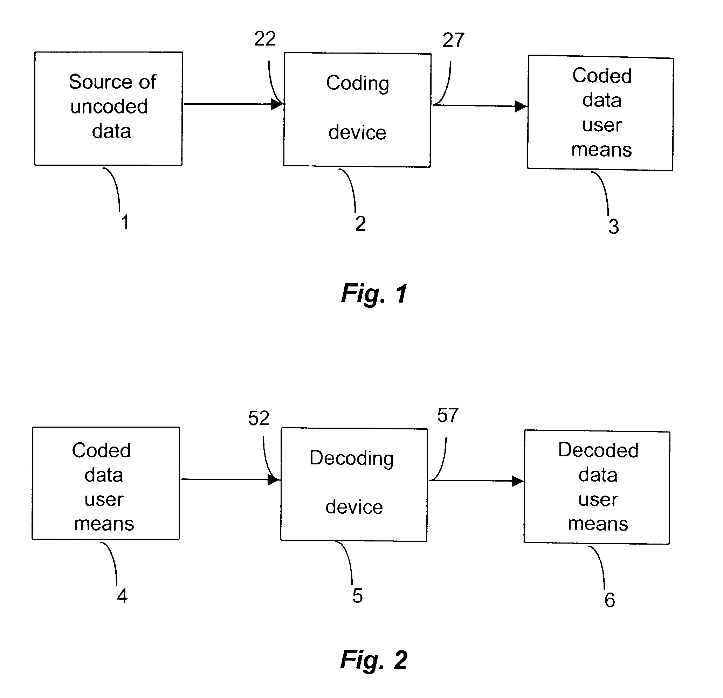

According to a chosen embodiment depicted in **Figure 1**, a data coding device 2 according to the invention has an input 22 to which is connected a source 1 of uncoded data. The source 1 has for example a memory means, such as a random access memory, hard disk, diskette or compact disk, for storing uncoded data, this memory means being associated with a suitable reading means for reading the data therein. A means for recording the data in the memory means can also be provided.

The source 1 can for example be a digital video camera delivering a sequence of images in the case of an image signal or a microphone in the case of a sound signal.

The source 1 may also be for example a digital photographic camera in the case of a signal representing a fixed image.

When the data are a sequence of images, the sequence of image can be coded as a whole, each image being coded as a function of at least one reference image, or each image in the sequence may be coded as a fixed image, independently of the other images in the sequence. The sequence can also be coded as a three-dimensional signal (two spatial dimensions and one time dimension), similarly to a fixed image.

Means 3 using coded data are connected at the output 27 of the coding device 2.

The user means 3 include for example means for storing coded data, and/or means of transmitting coded data.

**Figure 2** depicts a device 5 for decoding data coded by the device 2.

Means 4 using coded data are connected at the input 52 of the decoding device 5. The means 4 include for example means of storing coded data, and/or means of receiving coded data which are adapted to receive the coded data transmitted by the transmission means 3.

Means 6 using decoded data are connected at the output 57 of the decoding device 5. The user means 6 are for example image display means, or sound restoration means, according to the nature of the data being processed.

The coding device and the decoding device can be integrated into one and the same digital apparatus, for example a digital video camera, or a digital photographic camera, provided with a display screen.

The preceding coding device, or the preceding decoding device can be integrated in a data processing device, a communication device, such as computer, printer or facsimile apparatus.

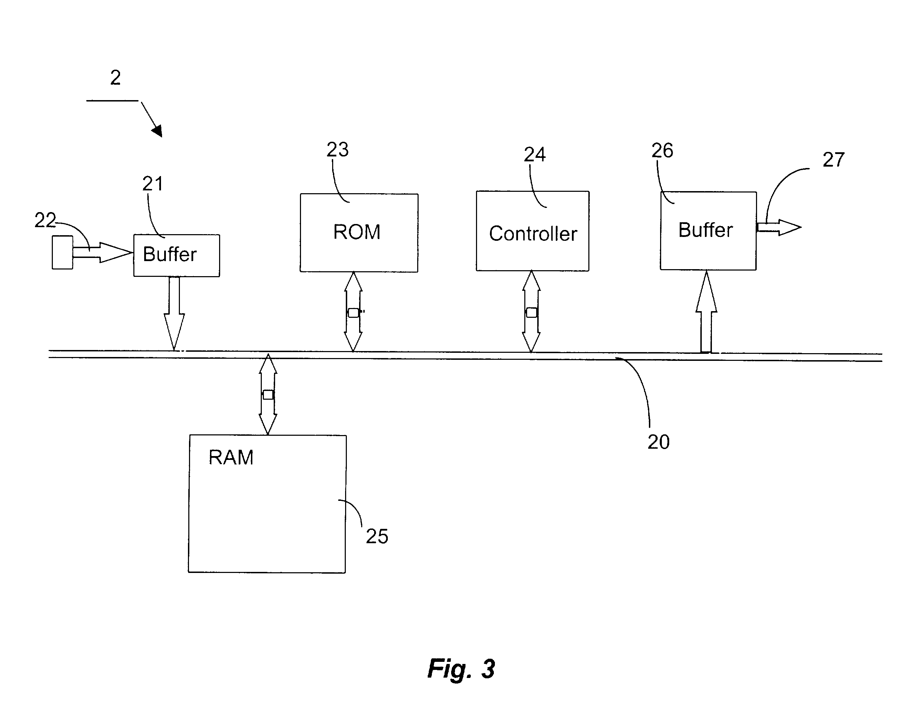

One embodiment of a data coding device 2 is depicted in **Figure 3**.

The coding device 2 has a data and address bus 20 to which are connected:

- an input buffer memory 21, also connected to the input 22 of the device, for temporarily storing the data to be coded,
- a read only memory (ROM) 23 in which there is stored a coding algorithm which will be disclosed hereinafter,
- a controller 24 for implementing the coding algorithm,
- a random access memory (RAM) 25 for storing, in registers, parameters modified during the execution of the coding algorithm, and
- an output buffer memory 26, also connected to the output 27 of the device.

The coding algorithm can be, totally or partially, memorised in any storage medium capable of cooperating with the controller 24. This storage medium is integrated or can be detachably mountable on the coding device. For example, the storage medium is a floppy disk, or a CR-ROM.

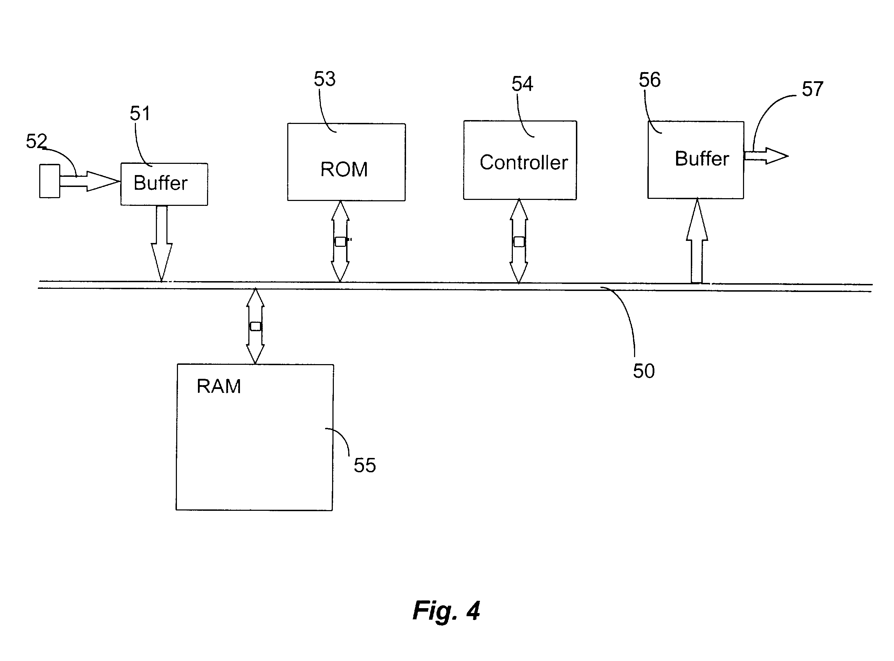

An embodiment of the data decoding device 5 is depicted in **Figure 4**.

The decoding device 5 has a data and address bus 50 to which are connected:

- an input buffer memory 51, also connected to the input 52 of the device, for temporarily storing the data to be coded,
- a read only memory (ROM) 53 in which there is stored a decoding algorithm which will be disclosed hereinafter,
- a controller 54 for implementing the decoding algorithm,
- a random access memory (RAM) 55 for storing, in registers, parameters modified during the execution of the decoding algorithm, and
- an output buffer memory 56, also connected to the output 57 of the device.

The decoding algorithm can be, totally or partially, memorised in any storage medium capable of cooperating with the controller 54. This storage medium is integrated or can be detachably mountable on the decoding device. For example, the storage medium is a floppy disk, or a CR-ROM.

The operation of the coding 2 and decoding 5 devices will be detailed during the description of the different embodiments of the corresponding algorithms.

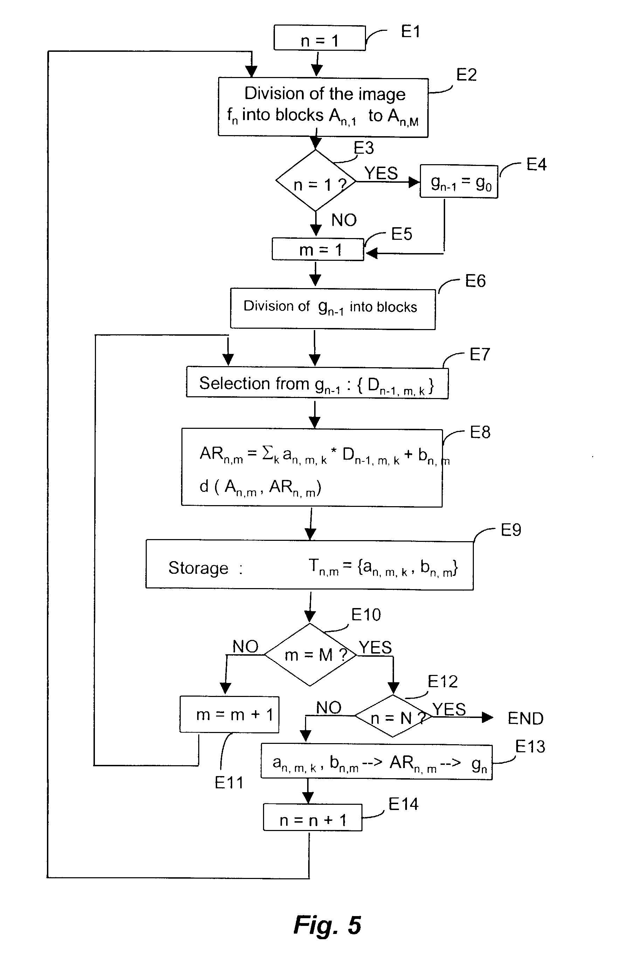

Figures 5 to 18 more particularly relate to image sequences.

According to the chosen embodiment depicted in **Figure 5**, the invention applies to the coding of a set of data representing physical quantities which is a series of digital images $f_1$ to $f_N$, where N is an integer.

Any image $f_n$ in the sequence, with n lying between 1 and N, is a grey-level image, having for example 128 x 96 pixels with 256 levels.

The algorithm depicted in Figure 5 has steps E1 to E14 which perform the coding of the sequence of digital images. Processing is effected image by image. Overall, an image in the sequence is coded as a function of a reference image.

Step E1 is an initialisation where the parameter n is initialised to 1, so as to consider first of all the first image in the sequence.

The following step E2 is a division of the image in question $f_n$ into a predetermined number M of blocks $A_{n,1}$ to $A_{n,M}$ of adjacent pixels. The number M of blocks can be predetermined, or can be a parameter set by the user of the algorithm. In this embodiment, the blocks $A_{n,1}$ to $A_{n,M}$ are adjacent, without overlap. In a variant, not shown, the blocks can overlap each other, in order to limit the block effects on decoding, to the detriment of the degree of compression.

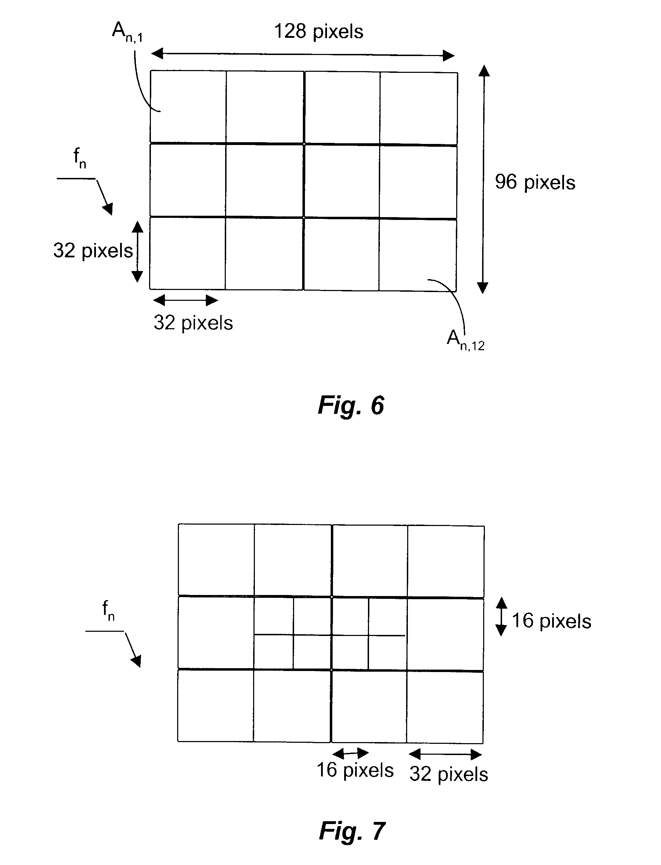

According to a first variant of this embodiment, depicted in **Figure 6**, the blocks all have the same predetermined size, and are for example square blocks $A_{n,1}$ to $A_{n,12}$ of 32 x 32 pixels in the case of the image $f_n$ with 128 x 96 pixels. The division of the image is uniform in the entire image. According to a second variant depicted in **Figure 7**, the size of the blocks, whilst being predetermined, depends on the location of the blocks in the image $f_n$: in a given zone of the image, for example a central zone liable to contain more details, the blocks are smaller than at the edges of the image. This given zone will then be coded more finely than the rest of the image. This variant is particularly of interest for video telephony, since in this case the images reproduce mainly the faces of the users, which are generally situated at the centre of the images.

Two different sizes of block are depicted in Figure 7: 32 x 32 and 16 x 16 pixels. However, a higher number of sizes can be envisaged for specific applications, notably if it is known that the quantity of information varies a great deal from one zone to another of the images to be coded.

In all cases, dividing the image results in a set of M blocs $A_{n,1}$ to $A_{n,M}$, stored in memory 25. The blocks $A_{n,1}$ to $A_{n,M}$ will be compressed, or coded, following each other, in any order. This order is preferably predetermined and is then the order in which the blocks will thereafter be decompressed, or decoded, which makes it unnecessary to mark the blocks with an index or by coordinates. As a variant, it is possible to mark the blocks and to associate the marking, index or coordinates, with the coded block, which makes it possible to decompress the blocks in any order, which may be different from the order used on compression.

Step E2 is followed by step E3, which is a test on the value of the parameter n. If the parameter n is equal to 1, step E3 is followed by step E4, at which an additional image $g_0$ is added to the sequence as a reference image for the first image $f_1$ of the sequence. The additional image $g_0$ can be any one, for example a uniformly grey image.

If at step E3 the parameter n is greater than 1, step E3 is followed by step E5, just as step E4 is followed by step E5. The latter is an initialisation of a parameter m to 1, to consider the first block $A_{n,1}$ in the image $f_n$.

The following step E6 is the division of one or more reference images into blocks of adjacent pixels, stored in memory 25. The size of the blocks depends on the size of the blocks to be coded $A_{n,m}$. Preferably the blocks of the reference images are $F^2$ times greater than the blocks to be coded, where F is an integer for example equal to two, which makes it possible to use many details of the reference image. The reference image blocks are next sub-sampled by the factor F, in order to work on blocks having the same number of pixels as the blocks to be coded. According to a variant which is simpler to implement, the reference image blocks have the same size as the blocks to be coded.

Step E6 is followed by step E7, which is the selection of source blocks $D_{n-1,m,1}$ to $D_{n-1,m,K}$ from one or more reference images with regard to the block to be coded $A_{n,m}$ of the image $f_n$, according to one of the following variants:

- the source blocks are selected from a reference image which precedes the image in the course of coding;

- the source blocks are selected from several reference images which precede the image in the course of coding;
- the source blocks are selected from a reference image which precedes, and from a reference image which follows, the image in the course of coding;
- the source blocks are selected from several reference images which precede, and/or from several reference images which follow, the image in the course of coding.

In each of the above variants, the reference image or images are images in the sequence, or are images in the sequence which have been coded and then decoded according to the invention. The latter case makes it possible to better restore the image at the time of decoding, which will be disclosed hereinafter. This is because only the decoded images will be available at the time of decoding; it is therefore preferable also to use decoded images as reference images for coding in order not to introduce any error.

According to a preferred embodiment which is particularly taken into account here, a single reference image $g_{n-1}$ will be considered, which is the image preceding the image $f_n$, previously coded and then decoded according to the invention.

The number K of source blocks is predetermined, and is equal for example to 4. As a variant, the number K is a set-up parameter of the algorithm. The source blocks are selected by their location in the reference image $g_{n-1}$ according to the location of the block to be coded $A_{n,m}$ in the image $f_n$. In general, the source blocks are selected from a region of the preceding image which depends on the region of the block to be coded in the image under consideration. Preferably, the two regions are similar, that is to say the superimposition of the image under consideration and the source image leads to partial overlapping of the source blocks by the block to be coded.

As a variant, it is possible to select the source blocks from a region which is « translated » with respect to the region of the block to be coded. This variant is of interest where it is known that the image to be coded represents a scene translated with respect to the reference image.

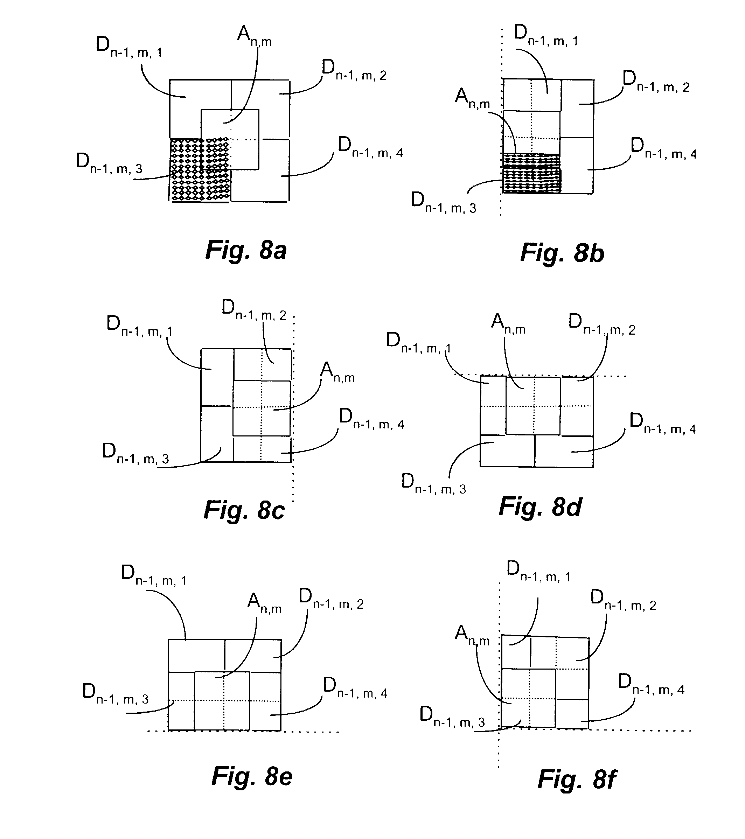

**Figures 8a to 8f** depict different examples of source block selection. In each of the figures 8a to 8f, the block to be coded $A_{n,m}$ of the image under consideration $f_n$ has been superimposed on the source blocks $D_{n-1,m,1}$ to $D_{n-1,m4}$ of the source image $g_{n-1}$. In the six examples, four source blocks of the same size as the block to be coded $A_{n,m}$ are considered.

In Figure 8a, the block to be coded $A_{n,m}$ is in a central part of the image f; the four source blocks are adjacent and the block to be coded is centred overall on the set of the four selected source blocks.

In Figures 8b to 8e, the block to be coded $A_{n,m}$ is situated on an edge of the image represented by a dotted line. Two of the source blocks partially overlap the other two source blocks, so that the block to be coded overlaps part of each source block.

In Figure 8f, the block to be coded $A_{n,m}$ is in a corner of the image, and the four source blocks partially overlap one another, so that the block to be coded overlaps part of each source block.

As a variant, when the block to be coded is on an edge or in a corner of the image, the four source blocks are adjacent, and two or three of the source blocks are truncated and made up either by a uniformly grey remainder, or by a remainder determined by extension of the image for example by symmetry or by periodization of the image.

The step E7 is followed by the step E8, at which a transformation between the source blocks and the block to be coded is calculated.

According to a preferred embodiment, the transformation is a multilinear approximation, of the form: $T_{n,m} = \{a_{n,m,k}, b_{n,m}\}$, making it possible to construct the block $AR_{n,m} = \Sigma_k ( a_{n,m,k} \times D_{n-1,m,k} ) + b_{n,m}$.

In this expression, $a_{n,m,k}$ is a scaling function, here a constant function, or coefficient, for a given source block $D_{n-1,m,k}$ and as a norm less than unity, and $b_{n,m}$ is a grey scale offset function, here a constant function, or coefficient, for the block to be coded $A_{n,m}$. The function $a_{n,m,k}$ is applied to each pixel of the block $D_{n-1,m,k}$, which here amounts to multiplying all the pixels by the coefficient $a_{n,m,k}$.

The functions, here the coefficients $a_{n,m,k}$ and $b_{n,m}$, are determined in order to minimise a distance $d(A_{n,m}, AR_{n,m})$ between the block to be coded $A_{n,m}$ and the block $AR_{n,m}$ reconstructed by applying the transformation $T_{n,m}$ to the source blocks according to the formula given above.

According to an embodiment which is simple to implement, the functions $a_{n,m,k}$ and $b_{n,m}$ are made discrete, and a limited number of possible values for the coefficients $a_{n,m,k}$ are tested. For example, each coefficient $a_{n,m,k}$ may take two integer values, a positive value and the opposite value. All combinations of coefficients $a_{n,m,k}$ are tested, and, for each combination, the coefficient $b_{n,m}$ is chosen to minimise the envisaged distance.

The distance is calculated between the grey levels of the block to be coded $A_{n,m}$ and the grey levels of the block $AR_{n,m}$ resulting from the application of the transformation to the source blocks $D_{n-1,m,1}$ to $D_{n-1,m,K}$.

The distance may be the absolute value of the sum of the differences, or the root mean square error, or the absolute value of the greatest difference, calculated between the source block $A_{n,m}$ and the block $AR_{n,m}$ reconstructed by applying the transformation $T_{n,m}$ to the source blocks.

In a preferred embodiment, the distance is the root mean square error calculated between the grey levels of the block to be coded $A_{n,m}$ and the grey levels of the block $AR_{n,m}$ resulting from application of the transformation to the source blocks $D_{n-1,m,1}$ to $D_{n-1,m,K}$.

The combination $T_{n,m} = \{a_{n,m,k}, b_{n,m}\}$ which minimises the distance is stored at step E9 in the memory 25 of the coding device 2 (Figure 3) as a compressed form of the block $A_{n,m}$. The set of transformations $T_{n,m}$ relating to the image $f_n$ forms a compressed image $h_n$.

According to other embodiments:

- the transformation combines a multilinear approximation calculated on the source blocks and geometric transformations, such as rotation, of the source blocks,
- the transformation is of polynomial form, for example of second or third order, calculated on the values of the source block pixels. This type of transformation gives more accurate results, whilst being longer to calculate.

The following step E10 is a test to check whether m is equal to M, that is to say whether the block which has just been coded is the last in the current image. If there remains at least one block to be coded in the image $f_n$, the step E10 is followed by the step E11 at which the parameter m is incremented by one unit, in order to consider the next block in the image $f_n$. The step E11 is followed by the step E7 described previously.

When the block which has just been coded is the last in the current image, step E10 is followed by step E12 which is a test for checking whether the image $f_n$ which has just been compressed is the last in the sequence. If this is not the case, step E12 is followed by step E13, which is the construction of the decompressed image $g_n$. The application of each of the transformations $T_{n,m}$ previously determined to the source blocks reconstructs each of the blocks $AR_{n,m}$, which as a whole form the decoded image $g_n$. The image $g_n$ is stored in memory 25 in order to be used for the coding of the following image $f_{n+1}$ (step E6).

The step E13 is followed by the step E14 in order to increment the parameter n by one unit. The step E14 is followed by the step E2 described previously. Where $n = N$, that is to say for the last image of the sequence, it is not necessary in this case to reconstruct the image $g_N$.

When the reply at the step E11 is positive, all the images $f_1$ to $f_N$ in the sequence have been compressed into compressed images $h_1$ to $h_N$.

According to another embodiment, not depicted, the coding method is modified as follows.

In order to code the image of the sequence, a reference image, chosen as described above, is considered.

The source blocks are no longer selected for each of the image blocks to be coded; source blocks are selected from the reference image, once and for all for the image to be coded and are thereafter used to code all the blocks of the image to be coded. The coding is thus faster, since selection of the source blocks is performed only once per image; the distortions introduced by the coding will however be greater than with the embodiment described previously.

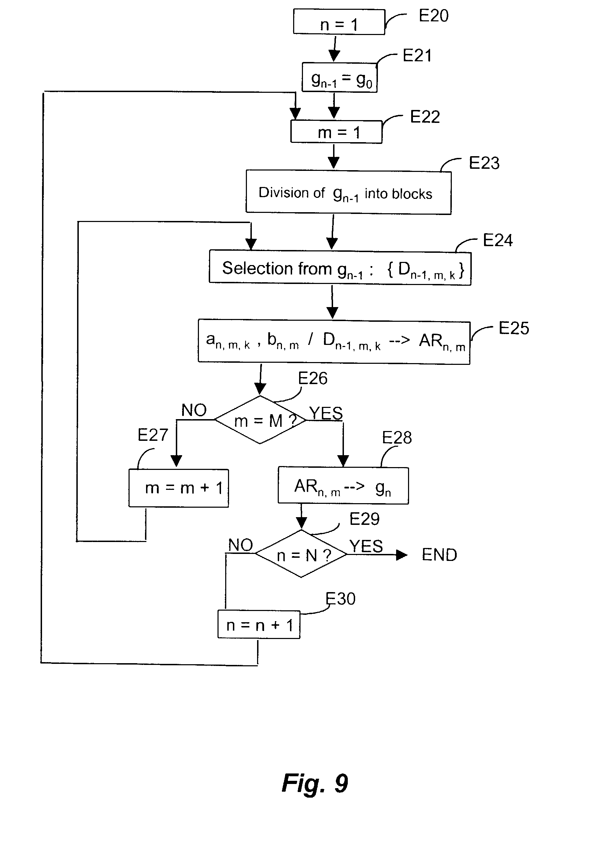

With reference to **Figure 9**, the first embodiment of a compressed digital image decoding algorithm consists of steps E20 to E30. The step E20 is an initialisation at which the parameter n is initialised to 1, for treating the first compressed image $h_1$ of the sequence.

At the following step E21, a supplementary image $g_0$ is added to the sequence as a source image for the first compressed image $h_1$ of the sequence. The supplementary image $g_0$ is identical to the one considered at the step E4 described previously, and is for example a uniformly grey image.

The following step E22 is the initialisation of the parameter m to 1, in order to consider the first block to be reconstructed. The blocks are preferably processed in the same order as at compression, which avoids having to store and process an index, or coordinates, in order to identify the blocks.

The following step E23 is division of the reference image $g_{n-1}$ into blocks of adjacent pixels, which are the source blocks stored in memory 55. The step E23 is identical to the step E6. The following step E24 is the selection of source blocks $D_{n-1,m,1}$ to $D_{n-1,m,K}$ from the reference image $g_{n-1}$, with regard to the block to be reconstructed $AR_{n,m}$. The reference image is selected in the same way as for coding, with the same possible variants. According to the preferred embodiment, the reference image $g_{n-1}$ is the decoded image preceding the image $h_n$. The source blocks are selected in the same way as for coding (step E6), with the same possible variants.

The step E24 is followed by the step E25 at which the transformation $T_{n,m}$ defined by the functions $a_{n,m,k}$ and $b_{n,m}$ is applied to the source blocks $D_{n-1,m,1}$ to $D_{n-1,m,K}$ selected at the preceding step E24, according to the formula:

$$AR_{n,m} = \Sigma_k \left( a_{n,m,k} \times D_{n-1,m,k} \right) + b_{n,m}.$$

The result of the step E25 is the decoded block $AR_{n,m}$ stored in memory 55.

The following step E26 is a test to determine whether the block which has just been decompressed is the last in the image in the process of decompression. If this is not the case, the step E26 is followed by the step E27 at which the parameter m is incremented by one unit in order to consider the next block. The step E27 is followed by the step E24 described previously.

When all blocks in the current image have been decompressed, the step E26 is followed by the step E28 at which the decompressed image $g_n$ is reconstructed and for example displayed on a screen, and/or stored. In general, the step E28 is the transfer of the image $g_n$ to the user means 6.

The following step E29 is a test to determine whether the image which has just been decompressed is the last image of the sequence. If there remains at least one image to be decompressed, the step E29 is followed by the step E30 at which the parameter n is incremented by one unit, in order to consider the following image in the sequence. The step E30 is followed by the step E22 described previously.

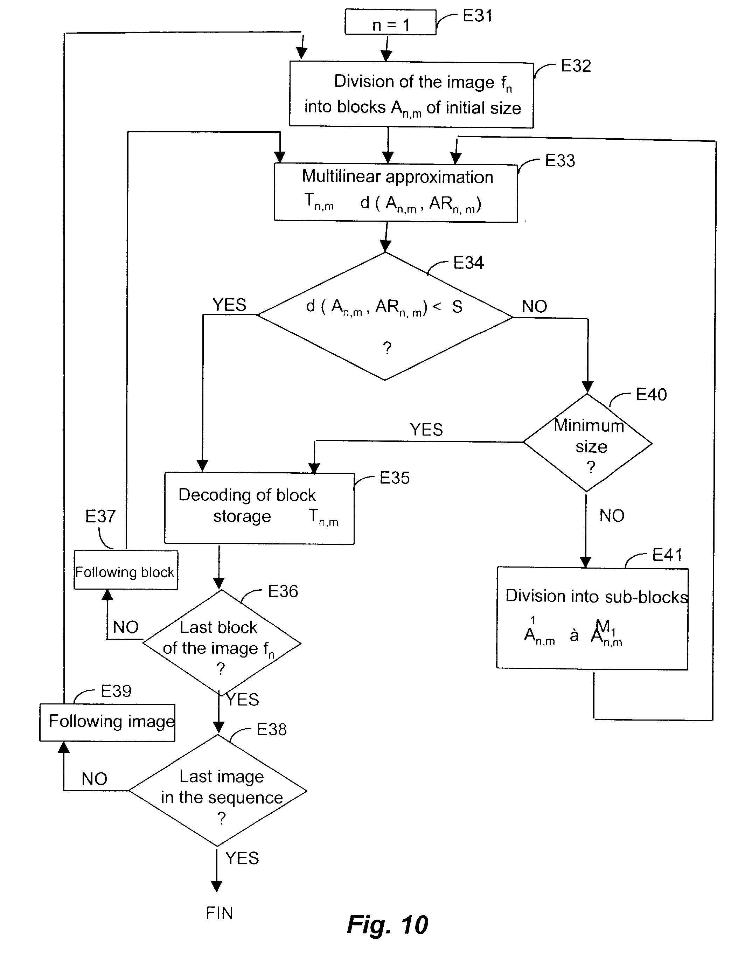

Another embodiment of the coding method according to the invention is depicted in **Figures 10, 11 and 12** in the form of an algorithm having steps E31 to E41 stored in memory 23 (Figure 3).

In this embodiment, the size of the blocks to be coded is determined in an adaptive fashion, according to the quantity of information present in the blocks to be coded and according to the « movement » of the blocks to be coded with respect to the reference image, that is to say the modifications between the pixels in the block to be coded and the pixels in the source blocks of the reference image.

A division tree, in this case a quaternary tree, is associated with each image to be coded. The quaternary tree represents the particular division of each image. Each compressed image $h_n$ has a set of transformations $\{T_{n,m}\}$ and the associated quaternary tree.

Step E31 is an initialisation of a parameter n à 1, to consider first of all the first image $f_1$ of the sequence.

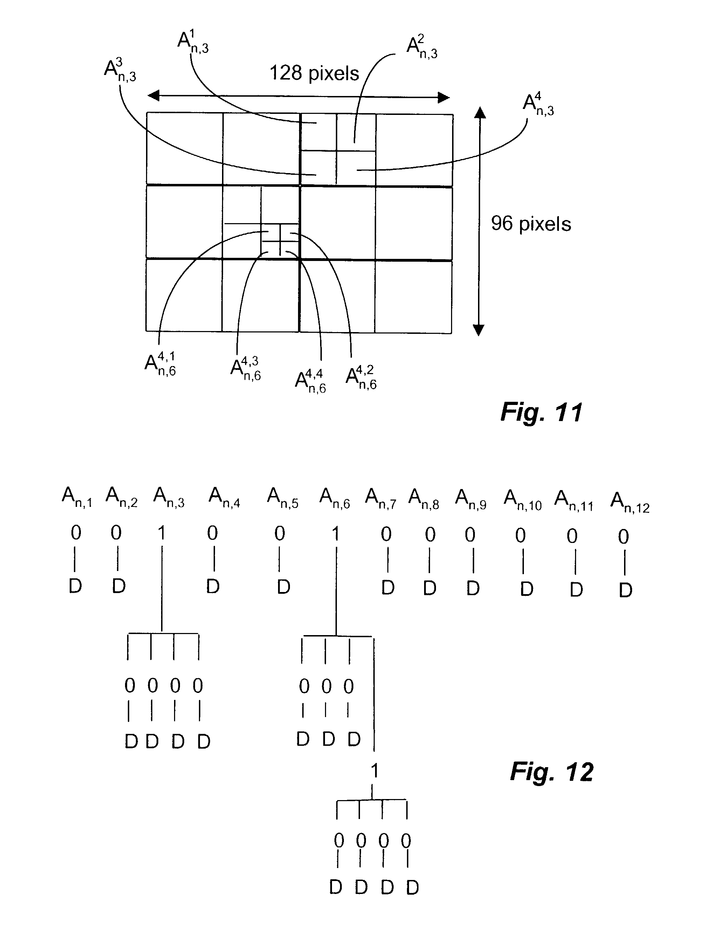

The following step E32 is the division of the current image $f_n$ into blocks of initial size. For example, as depicted in Figure 11, the image $f_n$ has a size of 128 x 96 pixels, and is divided into twelve blocks of size 32 x 32 pixels.

Each block of initial size $A_{n,1}$ to $A_{n,12}$ is associated with a root of the quaternary tree depicted in Figure 12, that is to say with a node of the tree which has no associated data and which has not yet been sub-divided. A marker is initialised to the value zero for each root.

The following step E33 is the seeking of a transformation between a block $A_{n,m}$ of the image to be coded $f_n$ and source blocks. Step E33 is similar to steps E3 to E8 previously detailed with reference to Figure 5.

The result of step E33 is a transformation $T_{n,m}$ determined for the block to be coded $A_{n,m}$. The different variants possible for selecting the reference images and source blocks, for the choice of the transformation and the distance, previously disclosed, are here applicable in the same way as for the first embodiment.

The following step E34 is a test for determining whether the distance $d(A_{n,m}, AR_{n,m})$ calculated at the previous step is below a predetermined threshold S.

If the response is positive, this means that the calculated approximation makes it possible to reconstruct a block $AR_{n,m}$ sufficiently close to the block to be coded $A_{n,m}$; step E34 is followed by step E35 at which the transformation $T_{n,m}$ is stored as a data block D associated with the node of the block $A_{n,m}$, in the quaternary tree of the image $f_n$. The marker remains at the value zero. The reconstructed block $AR_{n,m}$ is calculated and stored to memory in order to construct the image $g_n$.

Step E35 is followed by step E36, at which a test is carried out to determine whether the block which has just been processed is the last in the image in the course of coding. If this is not the case, step E36 is followed by step E37 in order to consider another block of the image $f_n$. Step E37 is followed by the previously described E33. When all the blocks in the image $f_n$ have been coded, step E36 is followed by step E38 at which a test is carried out to determine whether all the images in the sequence have been processed. If there remains at least one image to be coded, step E38 is followed by step E39 in order to consider another image in the sequence. Step E39 is followed by step E32.

If, at step E34, the distance $d(A_{n,m}, AR_{n,m})$ calculated at the previous step E33 is greater than the threshold S, step E33 is followed by step E40 at which a test is carried out to determine whether the size of the current block to be coded $A_{n,m}$ has attained a predetermined minimal value. If the response is positive, step E40 is followed by step E35, that is to say the determined transformation is stored to memory, even if it does not satisfy the criterion of step E34, in cases where the size of the current block to be coded $A_{n,m}$ has attained the minimum value.

If the response to the test at step E40 is negative, this step is followed by step E41 at which the current block to be coded at $A_{n,m}$ is divided into a predetermined number M1 of sub blocks $A^1_{n,m}$ to $A^{M1}_{n,m}$. As depicted in **Figure 11,** the division is for example effected in four sub-blocks. In the quaternary tree, the marker of the node associated with the divided block $A_{n,m}$ is set to the value 1, in order to indicate that the corresponding block has been divided. The division of the block results in four sub-blocks, whose nodes in the quaternary tree have markers initialised to zero. The order of the sub-blocks in the quaternary tree corresponds to their position in the divided block, and this order is the same for all the divided blocks: for example, bottom right sub-block, bottom left sub-block, top right sub-block, top left sub-block. The position information of the sub-blocks is used on decoding.

Step E41 is followed by the step E33 of calculating a transformation, for each of the sub-blocks determined at step E41. Each of these sub-blocks is coded in the same way as a block $A_{n,m}$. The following steps are run through successively for each sub-block $A^1_{n,m}$ to $A^{M1}_{n,m}$, which leads notably to the determination of a transformation for the current sub-block, and to its storage in memory if the criterion of step E34 is satisfied, or if the minimum sub-block size is attained (step E40).

For each sub-block, if the criterion of step E34 is not satisfied, and if the minimum sub-block size has not been attained (step E40), the sub-block under consideration is itself divided at step E41 into sub-blocks of a smaller size.

Thus, for example, in Figure 11, the image $f_n$ is divided into twelve blocks $A_{n,1}$ to $A_{n,12}$, the blocks $A_{n,3}$ and $A_{n,6}$ are divided into four sub-blocks, and one of

these sub-blocks $A^4_{n,6}$ is divided into four sub-blocks $A^{4,1}_{n,6}$, $A^{4,2}_{n,6}$, $A^{4,3}_{n,6}$ and $A^{4,4}_{n,6}$.

As already stated, the coding of an image $f_n$ of the sequence results in a compressed image $h_n$ having a set of transformations $\{T_{n,m}\}$ associated with a quaternary tree.

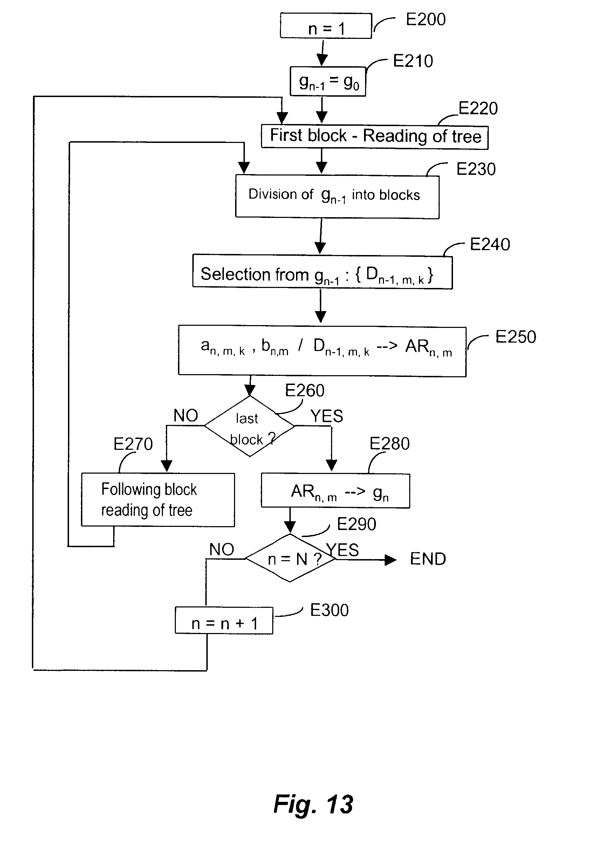

The decoding algorithm corresponding to this embodiment is depicted in **Figure 13** and includes steps E200 to E300 respectively analagous to steps E20 to E30 of the algorithm described with reference to Figure 9 with the following modifications :

- the steps E220 and E270 of selecting the first block to be reconstructed $AR_{n,m}$ and of the following block, respectively, include the reading of the quaternary tree associated with the image, notably in order to determine the size and position of the block to be reconstructed,
- step E270 is followed by the step E230 of division of the reference image.

These modifications are necessary in order to take account of the size and position of the blocks at the time of decoding; notably the size and position of the source blocks depend on those of the block to be reconstructed.

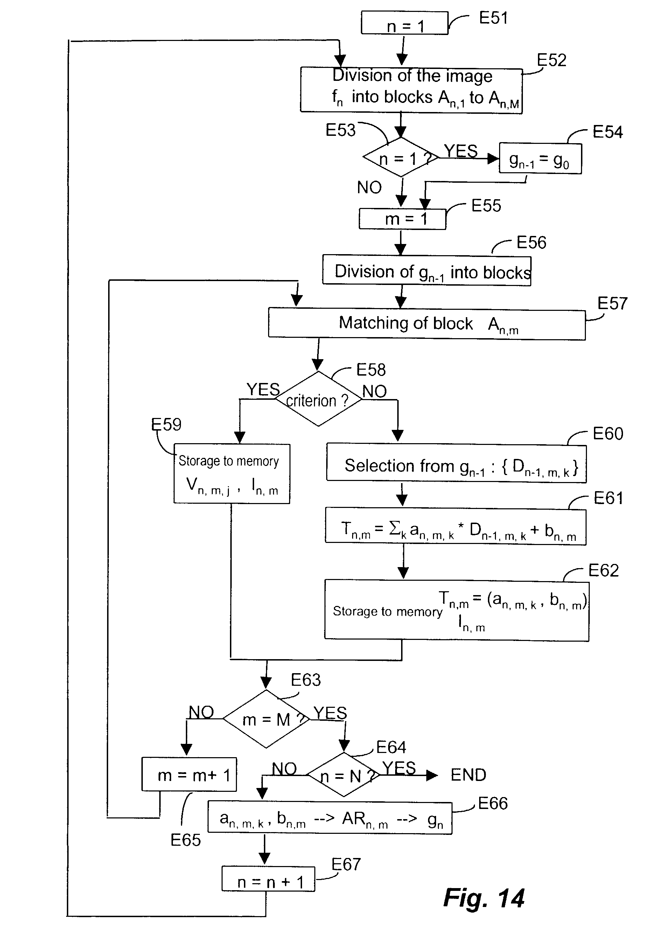

Another embodiment of the coding method according to the invention is depicted in **Figure 14**, and includes steps E51 to E67 stored in memory 23 (Figure 3). With respect to the first embodiment, this embodiment consists of first of all seeking, for each block to be coded, whether it can be coded by matching with a block of the reference image. If this coding is possible, the block is coded by block matching; otherwise the block is coded by means of a transformation determined as in the first embodiment.

Steps E51 to E56 are identical to steps E1 to E6 previously described with reference to the first embodiment (figure 5).

Step E56 is followed by step E57 at which the current block to be coded $A_{n,m}$ is coded by block matching: in the reference image $g_{n-1}$, a matching block $D_{n-1,m,j}$ is sought which is as similar as possible to the block to be coded, according to a predetermined criterion, for example a measurement of distance $d(A_{n,m}, D_{n-1,m,j})$ between the block to be coded and the matching block. As disclosed above, different types of distance can be used. The matching block for which the criterion is minimised is selected.

The following step E58 is a test for checking whether the criterion is below a predetermined threshold. If the response is positive, the relative postion of the matching block $D_{n-1,m,j}$ in the reference image $g_{n-1}$, with respect to the position of the block to be coded $A_{n,m}$, in the image in the course of coding $f_n$, that is to say the movement vector $V_{n,m,j}$, is stored in memory 25, at step E59. An indicator $I_{n,m}$ is also stored to memory, in order to indicate that the block under consideration is coded by block matching. This indicator is for example an additional bit set to the value one. The movement vector $V_{n,m,j}$ and the indicator $I_{n,m}$ represent the coding information of the block $A_{n,m}$.

Step E59 is followed by steps E63 to E67, respectively identical to the previously described steps E10 to E14.

If the response is negative at step E58, that is to say if the coding by block matching does not give a satisfactory result, step E58 is followed by steps E60 to E67, respectively analogous to the previously described steps E7 to E14. Step E61 results in a transformation $T_{n,m}$. The indicator $I_{n,m}$, for example the additional bit set to the value zero, is associated with each transformation $T_{n,m}$.

As a variant, the two previous embodiments are combined: it is sought first of all to code the blocks by block matching and then, if this first coding is not possible, by means of a transformation; the steps of coding by determination of a transformation include then the variation of the size of the block to be coded as a function of a criterion.

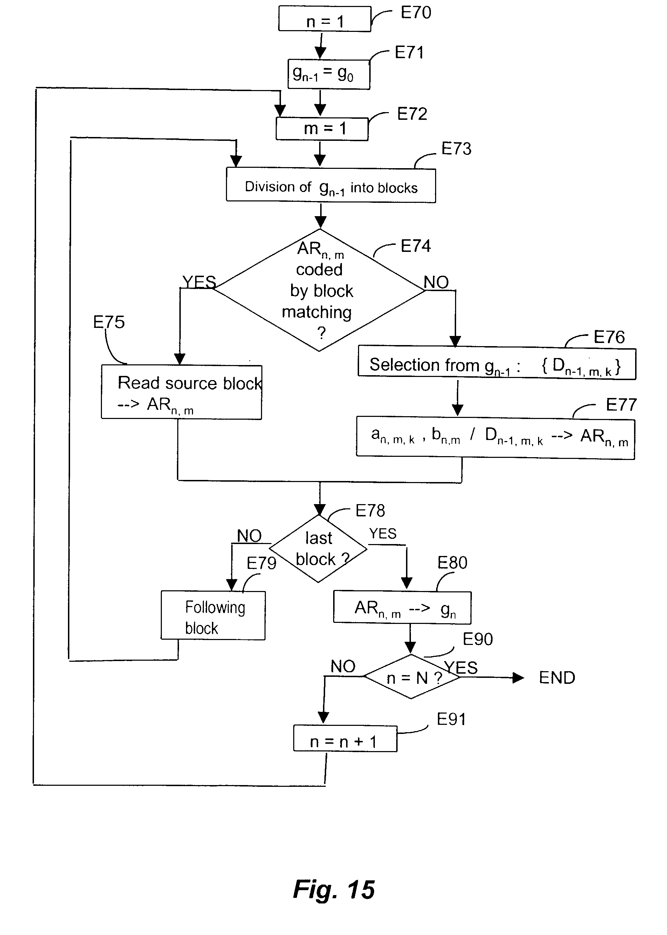

The coding method corresponding to the coding of Figure 14 is depicted in **Figure 15** and includes steps E70 to E91 stored in memory 53 of the device 5 (Figure 4).

Steps E70 to E73 are respectively identical to the steps E20 to E23 described with reference to Figure 9.

The following step E74 is a test for determining whether the block in the course of construction $AR_{n,m}$ has been coded by block matching. The test consists of analysing the value of the indicator $I_{n,m}$ and seeking whether the indicator $I_{n,m}$ is at the value one.

If the response is positive, then the following step E75 consists of reading in the reference image $g_{n-1}$ the matching block $D_{n-1,m,j}$ which is determined by the movement vector forming the compressed form $V_{n,m,j}$ and copying this block as a decoded block $AR_{n,m}$. Step E75 is followed by steps E78 to E91, which are respectively identical to the previously described steps E25 to E30 (Figure 9).

If the response at step E74 is negative, step E74 is followed by steps E76 to E91, which are respectively identical to the previously described steps E24 to E30 (Figure 9).

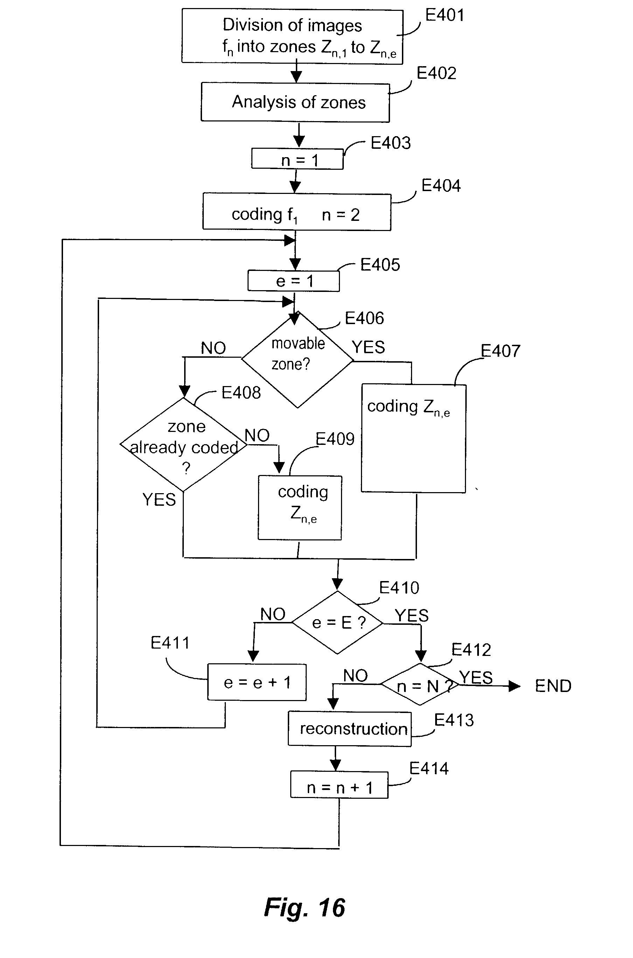

Another embodiment of the coding method according to the invention is depicted in **Figure 16** and includes steps E401 to E414 stored in memory 23 (Figure 3).

With respect to the first embodiment, this embodiment consists of dividing each image to be coded into zones, analysing the zones in order to determine whether they are fixed or movable, then coding the fixed zones according to a fixed image coding method, and the movable zones as in the first embodiment.

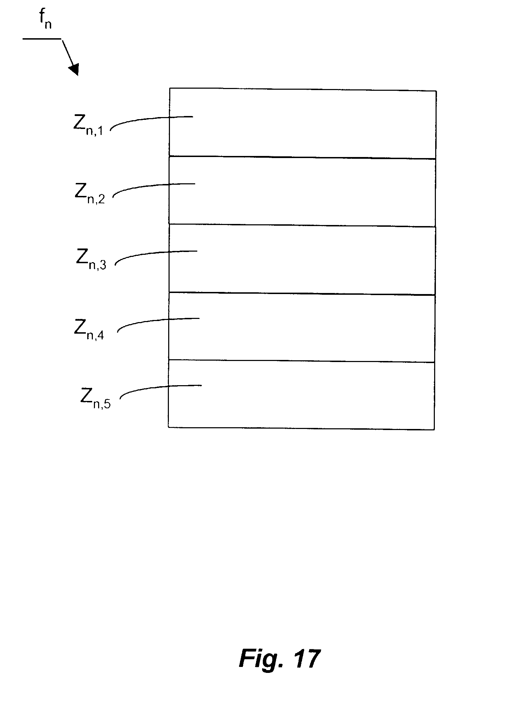

Step E401 is the division of each of the images into predetermined zones $Z_{n,1}$ to $Z_{n,E}$, where E is an integer equal to five for example. Figure 17 depicts the image $f_n$ divided into five zones $Z_{n,1}$ to $Z_{n,E}$ which are bands of the same size.

The following step E402 is an analysis of the zones in order to determine whether each of the zones $Z_{n,e}$ is « fixed » or « movable ». Fixed zone means a zone which is identical to (or very little different from,) the zone having the same position in the previous image in the sequence. Conversely, the zone is said to be movable if it is sufficiently different from the zone which had the same position in the previous image in the sequence. The difference between the zone in the course of processing and the zone having the same location in the previous image is assessed by measuring the distance between the two zones and comparing the distance with a threshold. As disclosed previously, different types of distance can be envisaged. A zone indicator $IN_{n,e}$ is associated with each of the zones in order to indicate whether the zone in question is fixed or movable. The zone indicator $IN_{n,e}$ includes for example a bit set to one or to zero in order to signify fixed zone or movable zone.

Step E402 is followed by step E403, which is an initialisation at which the parameter n is initialised to one, in order to consider first of all the first image $f_1$ in the sequence.

Step E403 is followed by step E404 at which the first image $f_1$ of the sequence is coded according to a fixed image coding method. This method is for example a method of the JPEG (Joint Picture Expert Group) type, or the coding method described hereinafter. The coding type, in this case fixed image coding, is stored by an indicator. This indicator is stored only during coding and is not associated with the coded form of the zones of the image $f_1$. The parameter n is incremented by one in order next to consider the folowing image $f_2$.

The following step E405 is an initialisation of a parameter e to 1, in order to consider the first zone $Z_{n,1}$ in the current image $f_n$.

The following step E406 is a test for determining whether the current zone $Z_{n,e}$ is fixed or movable. The test consists of reading and analysing the value of the zone indicator $IN_{n,e}$.

If the zone in the course of processing $Z_{n,e}$ is movable, step E406 is followed by step E407, at which the zone $Z_{n,e}$ is divided into blocks, each block is then coded by a transformation $T_{n,m}$ between the block and the source blocks taken from the reference image. Step E407 is equivalent to the previously described steps E2 and E5 to E11 (Figure 5).

If the zone in the course of processing $Z_{n,e}$ is fixed, step E406 is followed by step E408, which is a test for determining whether the zone has already been coded during the coding of a previous image. This test consists of reading the coding type indicator of the relevant zone of the previous image.

If the response at step E408 is negative, this step is followed by step E409 at which the zone $Z_{n,e}$ is coded according to the fixed image coding method, for example the method of the JPEG (Joint Picture Expert Group) type, or the coding method method described hereinafter. The coding type indicator indicates that the zone under consideration is coded according to a fixed image coding.

If the response is positive, the zone under consideration is not coded. Thus a fixed zone in several successive images is coded only once for the first of these images, and is then not coded for the following images. Consequently coding is fast and requires few bits.

The following step E410 is a test for checking whether e is equal to E, that is to say whether the zone which has just been coded is the last zone to be coded in the current image $f_n$. If there remains at least one zone to be coded in the image $f_n$, step E410 is followed by step E411, at which the parameter e is incremented by one unit, in order to consider the following zone in the image $f_n$. Step E411 is followed by the previously described step E406.

When the zone which has just been coded is the last in the current image, step E410 is followed by step E412, which is a test for checking whether the image $f_n$ which has just been compressed is the last in the sequence. If this is not the case, step E412 is followed by step E413, which is the construction of the movable zones of the decompressed image $g_n$. A movable zone is reconstructed by appylying each of the previously determined transformations $T_{n,m}$ to the source blocks in order to form blocks $AR_{nm}$. The movable zones of the image $g_n$ are stored in memory 25 in order to be used for coding the movable zones of the following image $f_{n+1}$.

Step E413 is followed by step E414 for incrementing the parameter n by one unit. Step E414 is followed by the previously described step E402. Where n=N, that is to say for the last image in the sequence, it is not necessary here to reconstruct the movable zones of the image $g_N$.

When the response at step E11 is positive, all the images $f_1$ to $f_N$ of the sequence have been compressed into compressed images $h_1$ to $h_N$.

As a variant, the zones are analysed along with the coding of the images.

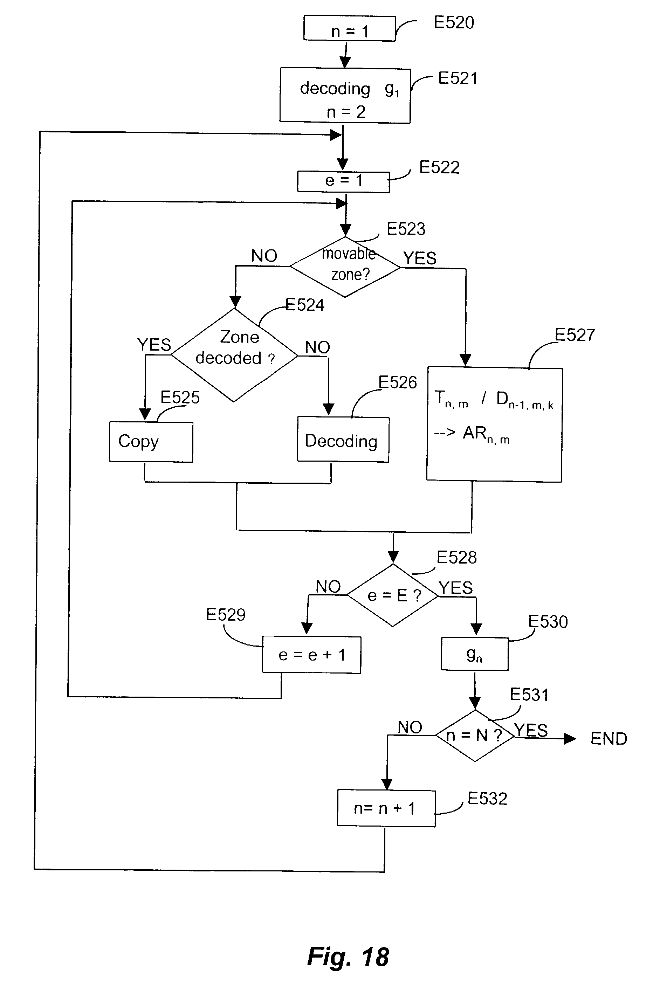

The decoding method corresponding to the coding of Figure 16 is depicted in **Figure 18** and includes steps E520 to E530 stored in memory 53 of the device 5 (Figure 4).

Step E520 is an initialisation at which the parameter n is initialised to 1, in order to process the first compressed image $h_1$ in the sequence.

At the following step E521, the first compressed image $h_1$ of the sequence is decoded according to a method which depends on the coding method of the previously described step E409. The parameter n is incremented by one in order to pass to the following image $h_2$.

The following step E522 is the initialisation of the parameter e to 1, in order to consider the first zone to be reconstructed. The zones are preferably processed in the same order as on compression, which avoids having to store and process an index, or coordinates, in order to mark the zones.

The following step E523 is a test for determining whether the current zone has been coded as a fixed zone or as a movable zone. The test consists of reading the value of the zone indicator $IN_{n,e}$.

If the current zone is a fixed zone, step E523 is followed by step E524, at which a test is carried out to determine whether the zone which had the same location in the previous image was decoded when step E526 was previously effected.

If the zone having the same location in the previous image has been decoded, this means that the current zone is identical to a zone which has already been decoded. Step E524 is followed by step E525 at which this previously decoded zone is copied as a decoded zone for the current zone of the current image. If the zone having the same location in the previous image has not been decoded, step E524 is followed by step E526 at which the current zone is decoded according to a method which depends on the coding method. A decoded zone indicator is stored to memory in order to be tested when step E524 is subsequently performed. Thus a zone which is fixed in several successive images is decoded for the first of these images and is then copied for the following images.

If the current zone is a movable zone, step E523 is followed by step E527, at which the movable zone is decoded. Source blocks $D_{n-1,m,1}$ to $D_{n-1,m,K}$ are selected from the reference image $g_{n-1}$, relative to each block to be reconstructed $AR_{n,m}$ in the current zone. The reference image is selected in the same way as for coding, the transformation $T_{n,m}$ defined for the functions $a_{n,m,k}$ and $b_{n,m}$ is applied to the source blocks $D_{n-1,m,1}$ to $D_{n-1,m,K}$ selected, according to the formula :

$$AR_{n,m} = \Sigma_k \left( a_{n,m,k} \times D_{n-1,m,k} \right) + b_{n,m}.$$

Step E527 results in the decoded blocks $AR_{n,m}$ of the current zone, which are stored in memory 55.

The following step E528 is a test for determining whether the zone which has just been decompressed is the last in the image in the course of decompression. If this is not the case, step E528 is followed by step E529 at which the parameter e is incremented by one unit in order to consider the following zone. Step E529 is followed by the previously described step E523.

When all the zones in the current image have been decompressed, step E528 is followed by step E530, at which the decompressed image $g_n$ is reconstructed and for example displayed on a screen, and/or stored to memory. In general, step E530 is the transfer of the image $g_n$ to user means 6.

The following step E531 is a test for determining whether the image which has just been decompressed is the last image in the sequence. If there remains at least one image to be decompressed, step E531 is followed by step E532, at which the parameter n is incremented by one unit, in order to consider the following image in the sequence. Step E532 is followed by the previously described step E522.

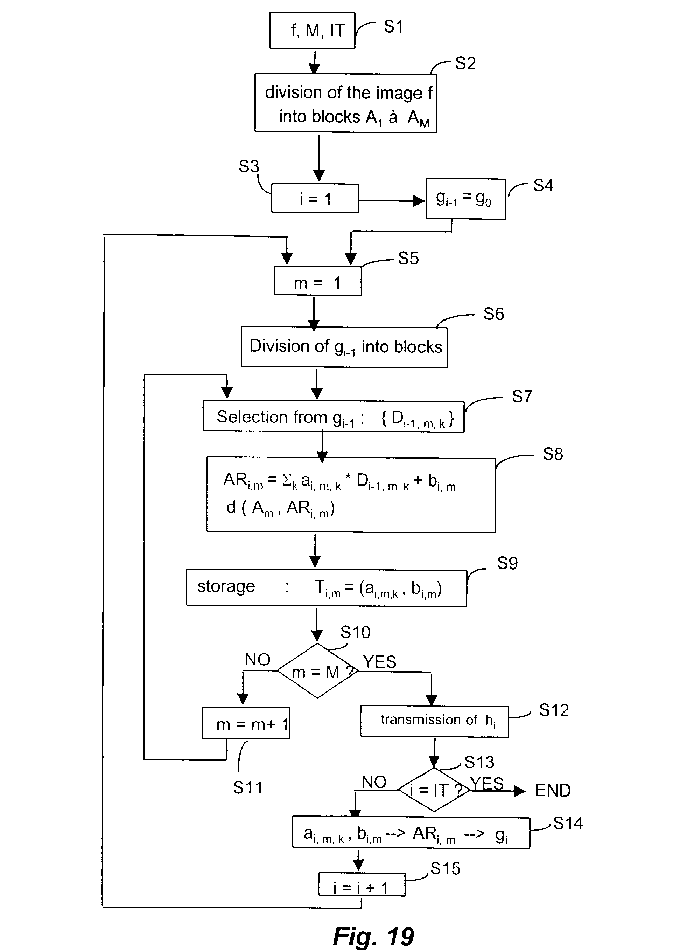

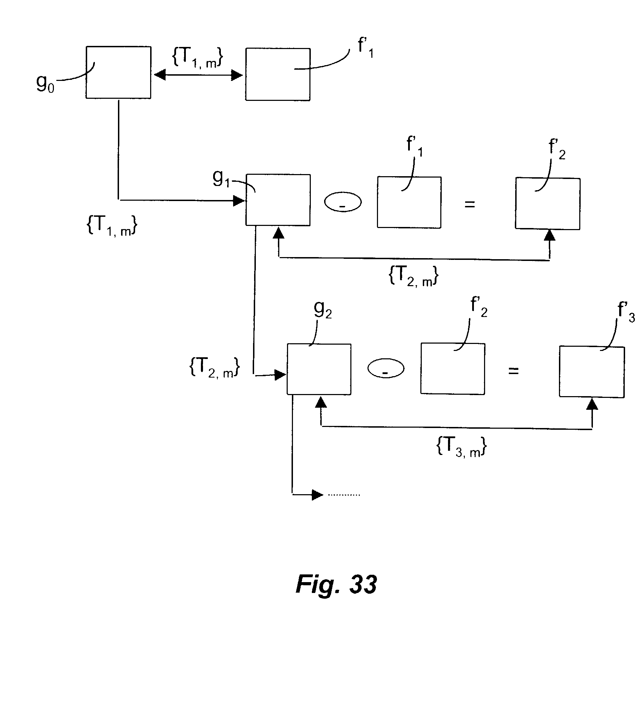

Figures 19 to 35 more particularly relate to still, or fixed, images.

Such an image is coded progressively, according to a number of coding iterations. The result of an iteration is equivalent to an image of a sequence. The series of images obtained at the consecutive iterations is equivalent to an image sequence, and the processing which will be now detailed is analogous to the previous one.

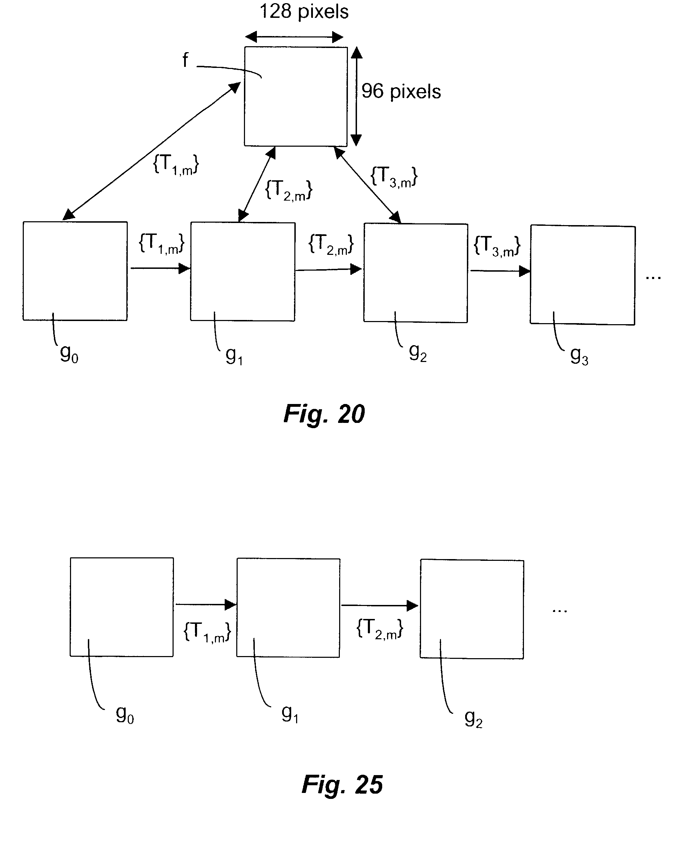

According to the embodiment chosen and depicted in **Figures 19 and 20**, the invention applies to the coding of a set of data representing physical quantities which is a digital image f, here a grey scale image, having by way of example 128 x 96 pixels with 256 levels.

The algorithm depicted in Figure 19 has steps S1 to S15 which carry out the coding of the digital image. Overall, as depicted in Figure 20, the image is coded progressively, according to a number of coding iterations. The result of coding of each iteration may be transmitted, so that the coded image is transmitted progressively, with a limited transmission speed.

The step S1 is an initialisation at which the source 1 provides an image to be coded f to the coding device 2. The number M of blocks is determined according to the size of the image. A number of coding iterations IT is also determined. The number of coding iterations IT is analogous to the number N previously described, and the series of images resulting of the coding iterations is analogous to a images sequence. The parameters M and IT may be predetermined or set by a user.

The following step S2 is a division of the image under consideration f into the number M of blocks $A_1$ to $A_M$ of adjacent pixels. In this embodiment, the blocks $A_1$ to $A_M$ are adjacent, without overlapping. As a variant, not depicted, the blocks may overlap one another, in order to limit block effects at decoding, to the detriment of the compression ratio.

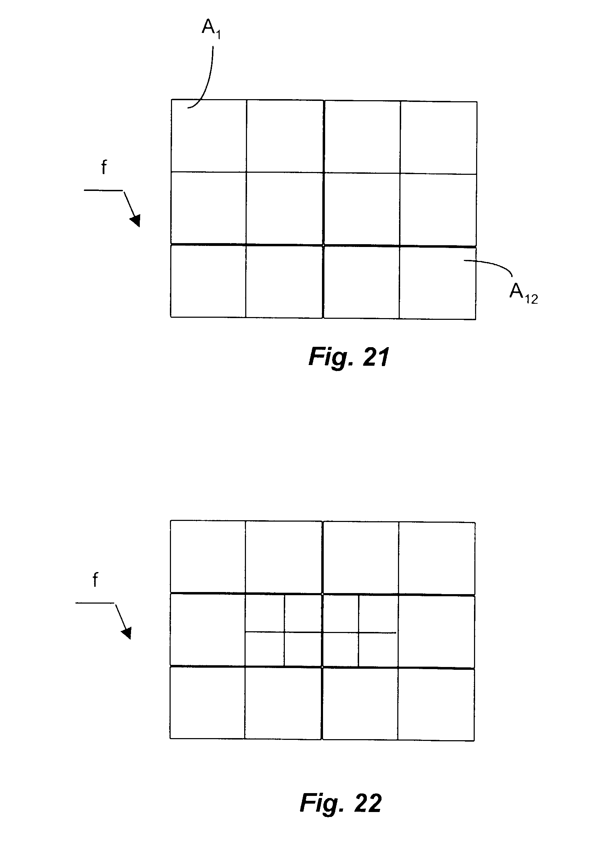

According to a first variant of this embodiment depicted in **Figure 21**, the blocks all have the same predetermined size, and are for example square blocks $A_1$ to $A_{12}$ of 32 x 32 pixels in the case of the 128 x 96 pixel image. Division of the image f is uniform within the whole image. According to a second variant depicted in **Figure 22**, the size of the blocks, whilst being predetermined, depends on the location of the blocks in the image: in a predetermined area of the image f, for example a central area liable to contain more detail, the blocks are smaller than on the edges of the image. This specific area will then be coded more finely than the rest of the image.

Two different block sizes are depicted in Figure 22: 32 x 32 and 16 x 16 pixels. However a larger number of sizes may be envisaged for specific applications, notably if it is known that the amount of information varies greatly from one area to another of the image to be coded.

In all cases, the result of division of the image is a set of M blocks $A_1$ to $A_M$, stored in memory 25. The

blocks $A_1$ to $A_M$ will be compressed, or coded, one after another, in any order. This order is preferably predetermined and is then the order in which the blocks will next be decompressed, or decoded, which makes it unnecessary to identify the blocks by means of an index or coordinates. As a variant, it is possible to identify the blocks and associate the identification, index or coordinates, with the coded block, which makes it possible to decompress the blocks in any order, which may be different from the order used at compression.

The step S2 is followed by the step S3, which is initialisation of a parameter i to 1, in order to start the first coding iteration. The step S3 is followed by the step S4 at which a supplementary image $g_0$ is considered as a reference image for the first coding iteration. The supplementary image $g_0$ is any image, for example a uniformly grey image.

The step S4 is followed by the step S5, which is initialisation of a parameter m to 1, in order to consider the first block $A_1$ in the image f.

The following step S6 is the division of a reference image into blocks of adjacent pixels, stored in memory 25. The size of the blocks depends on the size of the blocks to be coded $A_m$. Preferably, the reference image blocks are $F^2$ times larger than the blocks to be coded, where F is an integer for example equal to two, which makes it possible to use a lot of detail in the reference image. The reference image blocks are next sub-sampled by the factor F, in order to work on blocks having the same number of pixels as the blocks to be coded. According to a variant which is simpler to implement, the reference image blocks have the same size as the blocks to be coded. According to a preferred embodiment which is more particularly taken into account here, the reference image $g_{i-1}$ is the image coded and then decoded according to the invention during the iteration preceding the coding iteration in progress, except for the first iteration, for which the reference image $g_0$ is predetermined.

The step S6 is followed by the step S7, which is the selection of source blocks $D_{i-1,m,1}$ to $D_{i-1,m,K}$ from the reference image with regard to the block to be coded $A_m$ of the image f.

The number K of source blocks is predetermined, and is equal for example to 4. As a variant, the number K is a set-up parameter of the algorithm. The source blocks are selected by their location in the reference image $g_{i-1}$ according to the location of the block to be coded $A_m$ in the image f. In general, the source blocks are selected from a region of the reference image which depends on the region of the block to be coded in the image under consideration. Preferably, the two regions are similar, that is to say the superimposition of the image under consideration and the reference image leads to partial overlapping of the block to be coded and the source blocks.

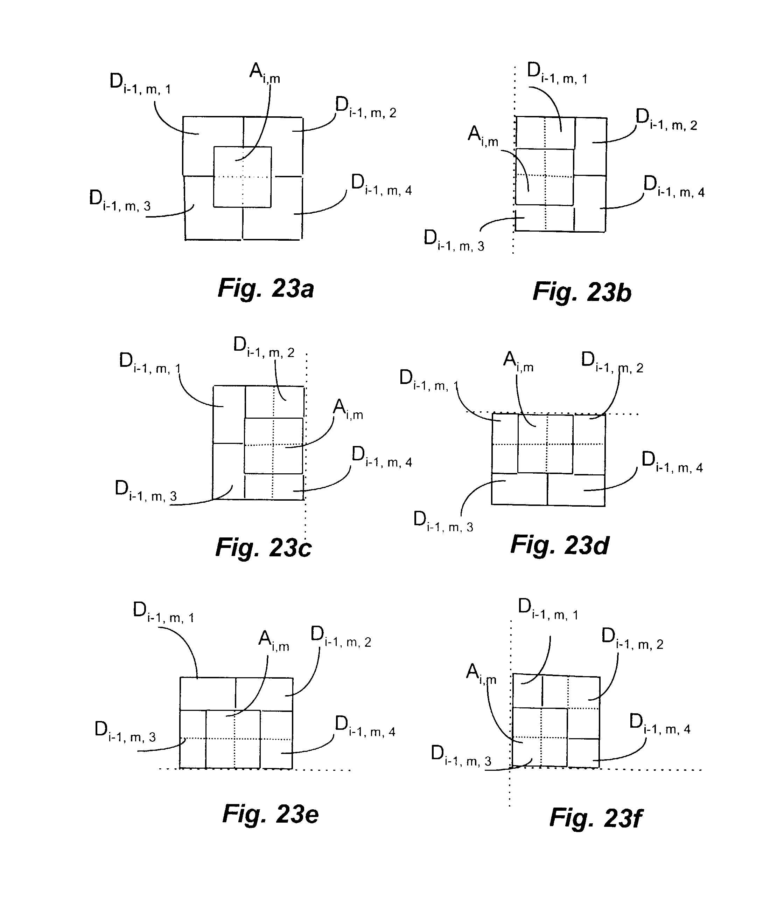

**Figures 23a to 23f** depict different examples of source block selection. In each of the Figures 23a to 23f, the block to be coded $A_m$ of the image under consideration f has been superimposed on the source blocks $D_{i-1,m,1}$ to $D_{i-1,m,4}$ of the source image $g_{i-1}$. In the six examples, four source blocks of the same size as the block to be coded $A_m$ are considered.

In Figure 23a, the block to be coded $A_m$ is in a central part of the image f; the four source blocks are adjacent and the block to be coded is centred overall on the set of the four selected source blocks.

In Figures 23b to 23e, the block to be coded $A_m$ is situated on an edge of the image represented by a dotted line. Two of the source blocks partially overlap the other two source blocks, so that the block to be coded overlaps part of each source block.

In Figure 23f, the block to be coded $A_m$ is in a corner of the image, and the four source blocks partially overlap one another, so that the block to be coded overlaps part of each source block.

As a variant, when the block to be coded is on an edge or in a corner of the image, the four source blocks are adjacent, and two or three of the source blocks are truncated and made up either by a uniformly grey remainder, or by a remainder determined by extension of the image for example by symmetry or by periodization of the image.

The step S7 is followed by the step S8, at which a transformation between the source blocks and the block to be coded is calculated.

According to a preferred embodiment, the transformation is a multilinear approximation, of the form: $T_{i,m} = \{ a_{i,m,k} , b_{i,m} \}$, making it possible to construct the block $AR_{i,m} = \Sigma_k ( a_{i,m,k} \times D_{i-1,m,k} ) + b_{i,m}$.

In this expression, $a_{i,m,k}$ is a scaling function, here a constant function, or coefficient, for a given source block $D_{i-1,m,k}$ and as a norm less than unity, and $b_{i,m}$ is a grey scale offset function, here a constant function, or coefficient, for the block to be coded $A_m$ at the iteration n. The function $a_{i,m,k}$ is applied to each pixel of the block $D_{i-1,m,k}$, which here amounts to multiplying all the pixels by the coefficient $a_{i,m,k}$.

The functions, here the coefficients $a_{i,m,k}$ and $b_{i,m}$, are determined in order to minimise a distance $d(A_m, AR_{i,m})$ between the block to be coded $A_m$ and the block $AR_{i,m}$ reconstructed at the iteration i by applying the transformation $T_{i,m}$ to the source blocks according to the formula given above.

According to an embodiment which is simple to implement, the functions $a_{i,m,k}$ and $b_{i,m}$ are made discrete, and a limited number of possible values for the coefficients $a_{i,m,k}$ are tested. For example, each coefficient $a_{i,m,k}$ may take two integer values, a positive value and the opposite value. All combinations of coefficients $a_{i,m,k}$ are tested, and, for each combination, the coefficient $b_{i,m}$ is chosen to minimise the envisaged distance.

The distance is calculated between the grey levels of the block to be coded $A_m$ and the grey levels of the block $AR_{i,m}$ resulting from application of the approximation to the source blocks $D_{i-1,m,1}$ to $D_{i-1,m,K}$.

The distance may be the absolute value of the sum of the differences, or the root mean square error, or the absolute value of the greatest difference, calculated between the source block $A_m$ and the block reconstructed by applying the transformation $T_{i,m}$ to the source blocks.

In a preferred embodiment, the distance is the root mean square error calculated between the grey levels of the block to be coded $A_m$ and the grey levels of the block $AR_{i,m}$ resulting from application of the transformation to the source blocks $D_{i-1,m,1}$ to $D_{i-1,m,K}$.

The combination $T_{i,m} = \{a_{i,m,k}, b_{i,m}\}$ which minimises the distance is stored at the step S9 in the memory 25 of the coding device 2 (Figure 3) as a compressed form of the block $A_m$. The set of compressed blocks $\{T_{i,m}\}$ relating to the image f and determined at the iteration i forms a compressed image $h_i$.

According to other embodiments:

-    the transformation combines a multilinear approximation calculated on the source blocks and geometric transformations, such as rotation, of the source blocks,
-    the transformation is of polynomial form, for example of second or third order, calculated on the values of the source block pixels. This type of transformation gives more accurate results, whilst being longer to calculate.

The following step S10 is a test to check whether m is equal to M, that is to say whether the block which has just been coded is the last in the image f. If there remains at least one block to be coded in the image f, the step S10 is followed by the step S11 at which the parameter m is incremented by one unit, in order to consider the next block in the image f. The step S11 is followed by the step S7 described previously.

When the block which has just been coded is the last in the image f, the step S10 is followed by the step S12, which is the transmission of the compressed image $h_i$. This transmission is one step of the progressive transmission of the coded image and will enable the decoding device to decode an approximation of the image, as described subsequently.

The following step S13 is a test to check whether all the iterations for coding the image f have been performed. If this is not the case, the step S13 is followed by the step S14 which is the construction of the decompressed image $g_i$. Application of each of the previously determined transformations $T_{i,m}$ to the source blocks reconstructs each of the blocks $AR_{i,m}$, which as a whole form the decoded image $g_i$. The image $g_i$ is stored in memory 25 in order to be used as a reference image at the following iteration i+1.

The step S14 is followed by the step S15 in order to increment the parameter i by one unit. The step S15 is followed by the step S5 described previously. Where i = IT, that is to say for the last iteration for coding the image f, it is not necessary in this case to reconstruct the image $g_{IT}$.

When the reply at the step S13 is positive, all the iterations for coding the image f have been carried out.

According to another embodiment, not depicted, the coding method is modified as follows.

In order to code the image, a reference image, chosen as described above, is considered at each iteration.

The source blocks are no longer selected for each of the image blocks to be coded; source blocks are selected from the reference image, once and for all for each iteration, and are then used to code all the image blocks to be coded. The coding is thus faster, since selection of the source blocks is performed only once per iteration; the distortions introduced by the coding will however be greater than with the embodiment described previously.

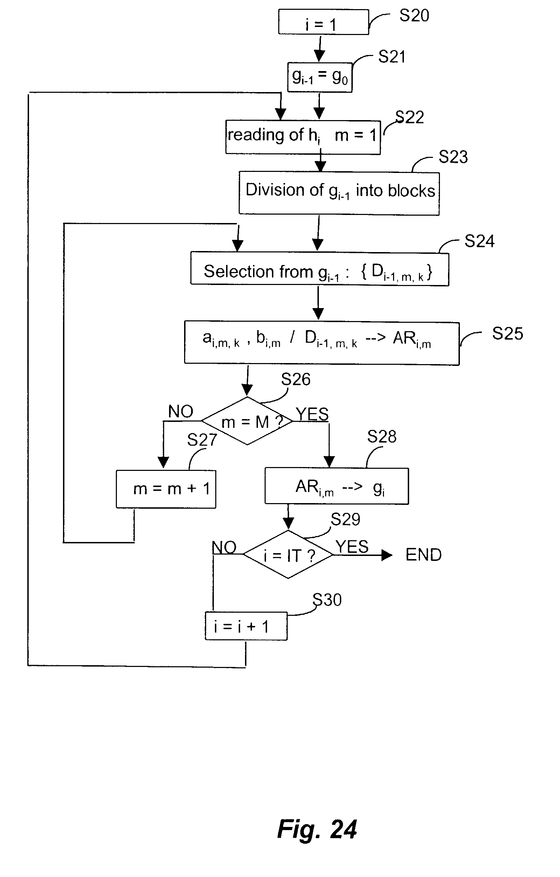

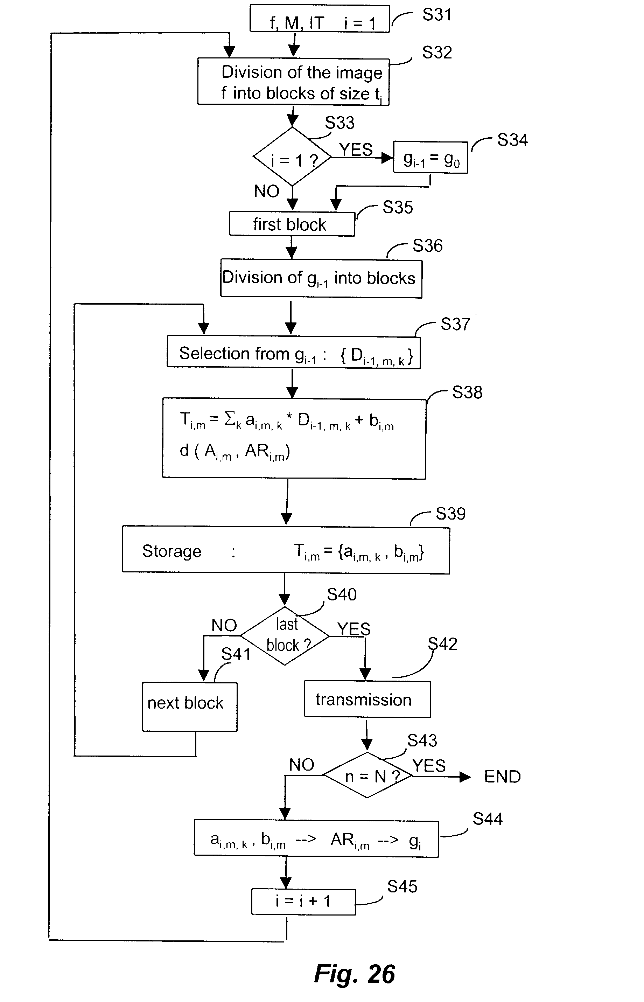

With reference to **Figures 24 and 25**, an embodiment of a progressive compressed digital image decoding algorithm consists of steps S20 to S30. The step S20 is an initialisation at which the parameter i is initialised to 1, for the first decoding iteration.

At the following step S21, a supplementary image $g_0$ is considered as a source image for the first decoding iteration. The supplementary image $g_0$ is identical to the one considered at the step S4 described previously, and is for example a uniformly grey image.

From the following step S22, the compressed form $h_i$ of the image is considered. The step S22 is the reading of the compressed form $h_i$, and initialisation of the parameter m to 1, in order to consider the first block to be reconstructed. The blocks are preferably processed in the same order as at compression, which avoids having to store and process an index, or coordinates, in order to identify the blocks.

The following step S23 is division of the reference image $g_{i-1}$ into blocks of adjacent pixels, which are the source blocks stored in memory 55. The step S23 is identical to the step S6. The following step S24 is the selection of source blocks $D_{i-1,m,1}$ to $D_{i-1,m,K}$ from the reference image $g_{i-1}$, with regard to the block to be reconstructed $AR_{i,m}$ of the image to be decompressed $h_i$. The reference image is selected in the same way as for coding. According to the preferred embodiment, the reference image $g_{i-1}$ is the decoded image preceding the image $h_i$. The source blocks are selected in the same way as for coding, with the same possible variants.

The step S24 is followed by the step S25 at which the transformation $T_{i,m}$ defined by the parameters $a_{i,m,k}$ and $b_{i,m}$ is applied to the source blocks $D_{i-1,m,1}$ to $D_{i-1,m,K}$ selected at the preceding step S24, according to the formula:

$$AR_{i,m} = \Sigma_k \left( a_{i,m,k} \times D_{i-1,m,k} \right) + b_{i,m}.$$

The result of the step S25 is the decompressed block $AR_{i,m}$ stored in memory 55.

The following step S26 is a test to determine whether the block which has just been decompressed is the last in the image in the process of decompression. If this is not the case, the step S26 is followed by the step S27 at which the parameter m is incremented by one unit in order to consider the next block. The step S27 is followed by the step S24 described previously.

When all blocks in the current image have been decompressed, the step S26 is followed by the step S28 at which the decompressed image $g_i$ is reconstructed and for example displayed on a screen, and/or stored. In general, the step S28 is the transfer of the image $g_i$ to the user means 6.

The following step S29 is a test to determine whether all the iterations have been performed. If there remains at least one iteration to be performed, the step S29 is followed by the step S30 at which the parameter i is incremented by one unit, in order to move to the next iteration. The step S30 is followed by the step S22 described previously.

Thus the image $g_1$ is reconstructed first of all, then the image $g_2$, and so on, as depicted in Figure 11, which enables a progressive construction of the decoded image, each iteration making it possible to obtain an image having more detail than at the preceding iteration.

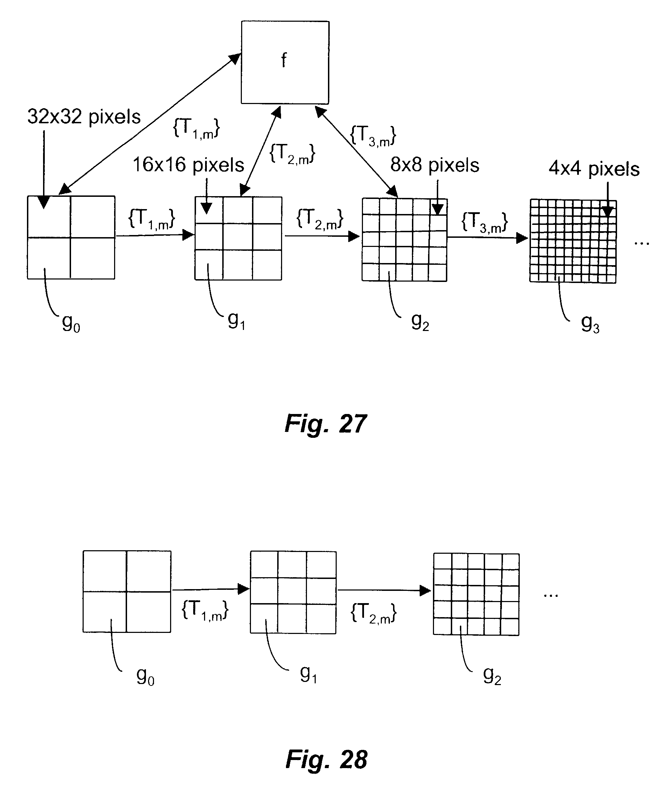

Another embodiment of the coding method according to the invention is depicted in **Figures 26 and 27** in the form of an algorithm having steps S31 to S45 stored in memory 23 (Figure 3).

In this embodiment, the size of the blocks to be coded decreases, and the number of blocks to be coded increases correlatively, at each coding iteration, so as to code finer and finer details.

The steps S31 to S45 are respectively analogous to the steps S1 to S15 described with reference to Figure 19. The differences compared with the preceding embodiment are as follows:

- the initialisation step S31 includes initialisation of the parameter i to 1, corresponding to the first coding iteration,
- the step S32 of division of the image f results in blocks, the size $t_i$ of which decreases, and the number of which increases, with successive iterations,
- the step S33 is a test to determine whether the parameter i is equal to 1, corresponding to the first iteration; if the reply is positive, the step S33 is followed by the step S34, otherwise, the step S33 is followed by the step S35,
- the step S45 is followed by the step S32 of division of the image f.

As depicted in Figure 27, the aim of the first coding iteration is to calculate a first set of transformations $\{T_{1,m}\}$, each of these transformations corresponding to the coding of a block of the image f from source blocks of the image $g_0$. The transformations are applied to the source blocks of the image $g_0$ in order to determine the image $g_1$.

The aim of the second coding iteration is to calculate a second set of transformations $\{T_{2,m}\}$, each of these transformations corresponding to the coding of a block of the image f from source blocks of the image $g_1$. The blocks of the image f have, for this iteration, a size smaller than that of the blocks considered at the preceding iteration. Correlatively, the source blocks also have a size smaller than those of the preceding iteration. The transformations are applied to the source blocks of the image $g_1$ in order to determine the image $g_2$.

The third iteration uses the image $g_2$ as a reference image, and a set of transformations $\{T_{3m}\}$ is determined between blocks of the image f and source blocks of the image $g_2$, the size of the blocks to be coded and the reference blocks being reduced compared with the preceding iteration. This iteration makes it possible to calculate the image $g_3$.

The decoding algorithm corresponding to this embodiment is identical to that depicted in Figure 24. **Figure 28** depicts the successive decoding iterations. At the first decoding iteration, the first set of transformations $\{T_{1,m}\}$ is applied to the respective blocks, having the first predetermined size $t_1$, of the image $g_0$. The image $g_1$ is thus reconstructed.

The image $g_1$ is divided into blocks having the second predetermined size $t_2$, then the second set of transformations is applied to the blocks of the image $g_1$, in order to form the image $g_2$, and so on.

The images reconstructed as the iterations are performed contain finer and finer details.

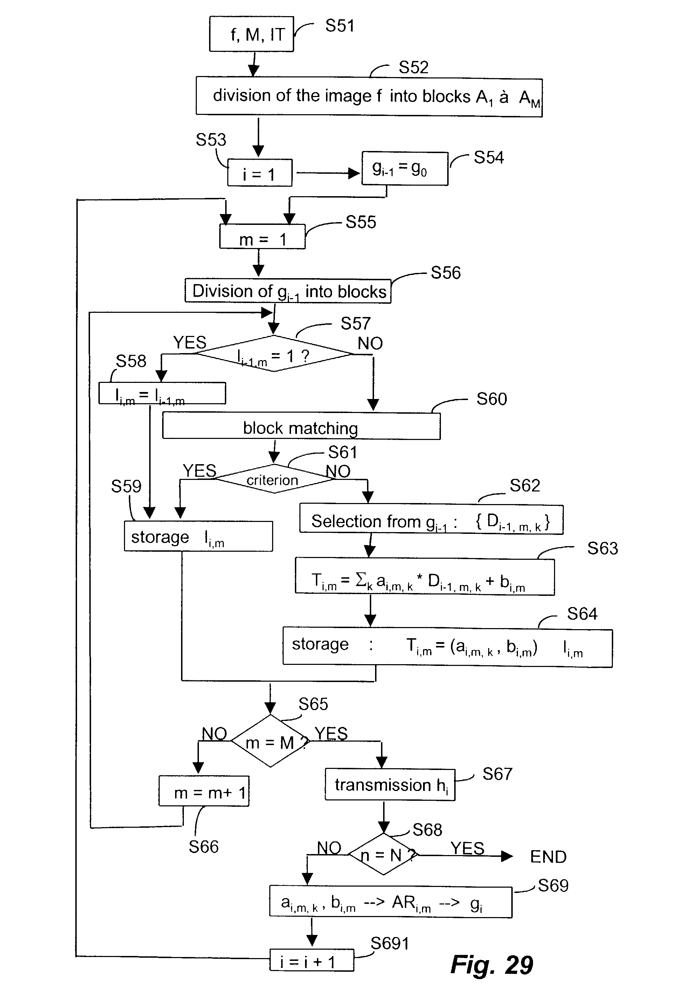

Another embodiment of the coding method according to the invention is depicted in **Figure 29,** and consists of steps S51 to S691 stored in memory 23 (Figure 3).

This embodiment includes first of all a test, for each block to be coded, as to whether it can be coded by matching with the reference image block which has the same size and occupies the same position in the image. If this coding is possible, the block is coded by block matching; otherwise, the block is coded by means of a transformation determined as in the first embodiment.

The steps S51 to S56 are identical to the steps S1 to S6 described previously with reference to Figure 19.

The step S56 is followed by the step S57 which is a test to determine whether the current block to be coded $A_m$ was coded by block matching at the preceding iteration. This test is carried out on a flag $l_{i-1,m}$, for example a bit set to the value 1 if the block $A_m$ is coded by block matching at the iteration i-1.

If the reply is positive, the step S58 is followed by the step S59, at which a flag $l_{i,m}$ is stored at the step S59, to indicate that the block under consideration is coded by block matching. This flag is for example a bit set to the value 1. The flag $l_{i,m}$ represents the coding information, at the iteration i, of the block $A_m$.

If the reply is negative at the step S58, the latter is followed by the step S60 at which the current block to

be coded $A_m$ is coded by block matching: the block $AR_{i-1,m}$ of the same size and having the same position in the image is looked for in the reference image $g_{i-1}$.

The following step S61 is a test to check whether a criterion is met. This criterion here consists of checking whether a distance calculated between the block to be coded $A_m$ and the matching block $AR_{i-1,m}$ is less than a predetermined threshold. If the reply is positive, a flag $I_{i,m}$ is stored at the step S59, to indicate that the block under consideration is coded by block matching. This flag is for example a bit set to the value 1. The flag $I_{i,m}$ represents the coding information, at the iteration i, of the block $A_m$.

The step S59 is followed by the steps S65 to S691, respectively identical to the steps S10 to S15 described previously.

If the reply is negative at the step S61, that is to say if the coding by block matching does not give a satisfactory result, the step S61 is followed by the steps S62 to S691, respectively identical to the steps S7 to S15 described previously. The result of the step S63 is a transformation $T_{i,m}$. The flag $I_{i,m}$ is set to the value zero and is associated with each transformation $T_{i,m}$.

As a variant, the two preceding embodiments are combined: an attempt is made first of all to code the blocks by block matching, and next, if this first coding is not possible, by means of a transformation; the steps of coding by determining a transformation then include varying the size of the block to be coded as the iterations are performed. In this case, the steps S57 and S58 are unnecessary, since the size of the blocks varies from one iteration to the next. The step S56 is then followed directly by the block matching step S60.

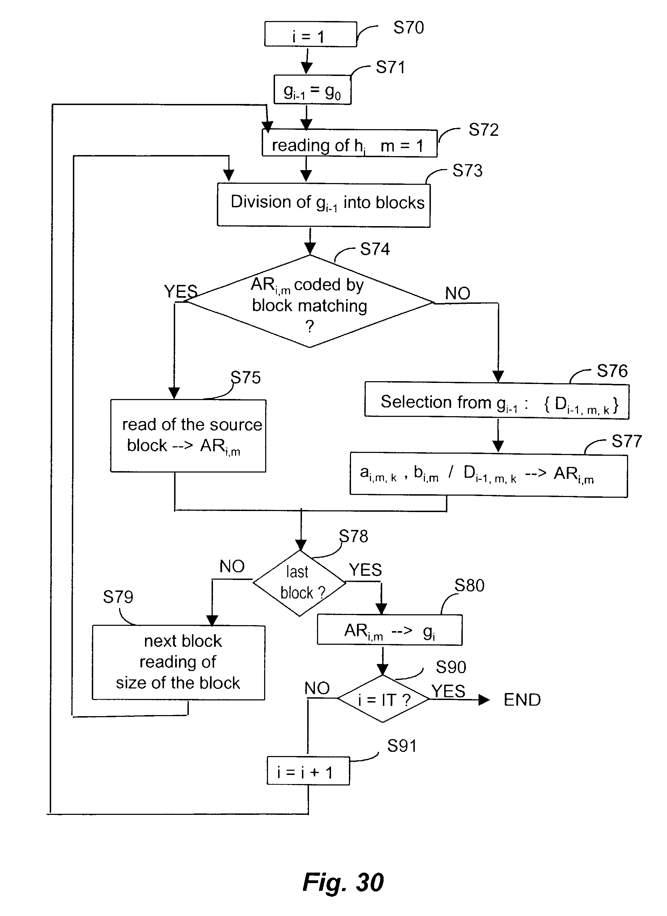

The decoding method corresponding to the coding of Figure 29 is depicted in **Figure 30** and consists of steps S70 to S91 stored in memory 53 of the device 5 (Figure 4).

The steps S70 to S73 are respectively identical to the steps S20 to S23 described with reference to Figure 24.

The following step S74 is a test to determine whether the block in the process of reconstruction $AR_{i,m}$ was coded by block matching. The test consists of analysing the value of the flag $I_{i,m}$ and of testing as to whether the flag $I_{i,m}$ is at the value 1.

If the reply is positive, then the following step S75 consists of reading, from the reference image $g_{i-1}$, the matching block $AR_{i-1,m}$ and of copying this block as the decoded block $AR_{i,m}$. Reconstruction of the block $AR_{i,m}$ is therefore very quick, since one block copy is involved. The step S75 is followed by the steps S78 to S91, which are respectively identical to the steps S25 to S30 described previously (Figure 24).

If the reply at the step S74 is negative, the step S74 is followed by the steps S76 to S91, which are respectively identical to the steps S24 to S30 described previously (Figure 24).

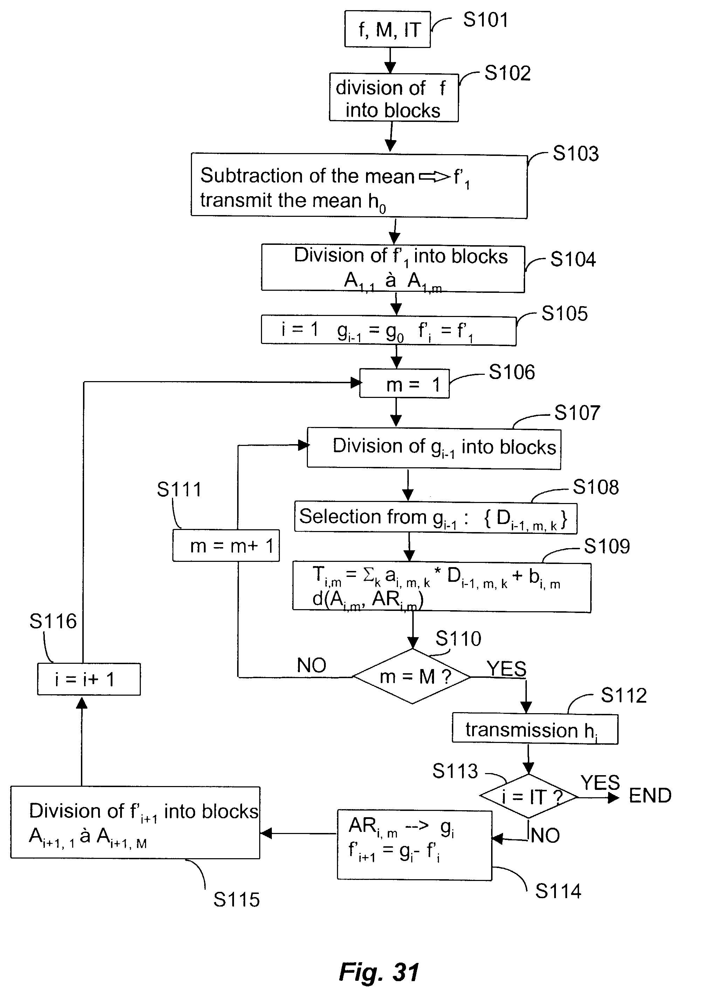

Another embodiment of the coding method according to the invention is depicted in **Figures 31 to 33**, and consists of steps S101 to S115 stored in memory 23 (Figure 3).

This embodiment includes working at each iteration on image differences and coding only the details which are additional compared with the preceding iteration.

The steps S101 and S102 are identical to the steps S1 and S2 described previously (Figure 19).

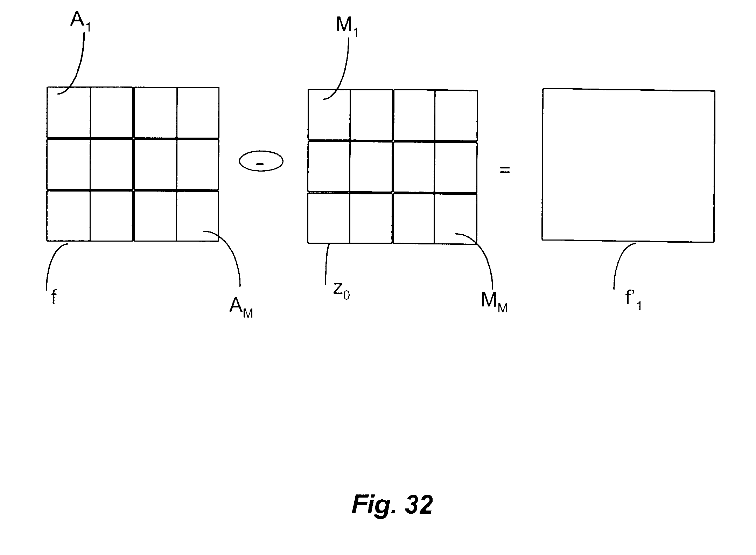

The following step S103 is the calculation of the mean value $M_1$ to $M_M$ of each of the blocks $A_1$ to $A_M$ of the image f, and the subtraction, pixel by pixel, of this mean value $M_m$ from each of the blocks $A_m$. The result of the step S103 is an image $f'_1$, as depicted in **Figure 32**. The image $z_0$ of the mean values has a compressed form $h_0$ having the mean value $M_1$ to $M_M$ of each of the blocks $A_m$. The compressed form $h_0$ is stored and/or transmitted in order to be used at the time of decoding.

The step S103 is followed by the step S104, which is the division into blocks $A_{1,1}$ to $A_{1,M}$ of the image $f'_1$.

As a variant, the steps S103 and S104 are removed, and the image f is worked on directly, as in the preceding embodiments.

The following step S105 is initialisation of a parameter i to 1, in order to start the first coding iteration. A supplementary image $g_0$ is considered as a reference image for the first coding iteration. The supplementary image $g_0$ is any image, for example a uniformly black image where image differences are being worked on. An image $f'_i$ is equal to the image $f'_1$.

The step S105 is followed by the step S106, which is initialisation of a parameter m to 1, in order to consider the first block $A_{i,1}$ in the image to be coded at the iteration i, that is the image $f'_i$.

The following step S107 is division of the reference image $g_{i-1}$ into blocks of adjacent pixels, stored in memory 25.

The step S107 is followed by the step S108, which is the selection of source blocks $D_{i-1,m,1}$ to $D_{i-1,m,K}$ from the reference image with regard to the block to be coded $A_{i,m}$ of the image to be coded $f'_i$.

The step S108 is followed by the step S109, at which a transformation $T_{i,m}$ between the selected source blocks and the block to be coded is calculated. The transformation $T_{i,m}$ which minimises the distance d $(A_{i,m}, AR_{i,m})$ is stored in the memory 25 of the coding device 2 (Figure 3) as a compressed form of the block $A_{i,m}$. The set of compressed blocks $\{T_{i,m}\}$ determined at the iteration n forms a compressed image $h_i$.

The following step S110 is a test to check whether m is equal to M, that is to say whether the block which has just been coded is the last in the current image $f'_i$. If there remains at least one block to be coded in the image $f'_i$, the step S110 is followed by the step S111 at which the parameter m is incremented by one unit, in order to consider the next block in the image $f'_i$. The step S111 is followed by the step S107 described previously.

When the block which has just been coded is the last in the image $f'_i$, the step S110 is followed by the step S112, which is the transmission of the compressed image $h_i$. This transmission is one step of the progressive transmission of the coded image and will enable the decoding device to decode an approximation of the image, as described subsequently.

The following step S113 is a test to check whether all the iterations for coding the image f have been performed. If this is not the case, the step S113 is followed by the step S114, which is the construction of the decompressed image $g_i$. Application of each of the previously determined transformations $T_{i,m}$ to the source blocks reconstructs each of the blocks $AR_{i,m}$, which as a whole form the decoded image $g_i$. The image $g_i$ is stored in memory 25 in order to be used as a reference image at the next iteration i+1. The image $f'_{i+1}$ to be coded at the next iteration i+1 is determined by subtracting the image $f'_i$ from the image $g_i$.

The step S114 is followed by the step S115 in order to divide the image $f'_{i+1}$ into blocks to be coded $A_{i+1,1}$ to $A_{i+1,M}$. These blocks will be coded at the following iteration.

The following step S116 increments the parameter i by one unit in order to move to the next iteration. The step S116 is followed by the step S106 described previously. Where i = IT, that is to say for the last iteration for coding the image f, it is not necessary in this case to reconstruct the image $g_{IT}$.

When the reply at the step S113 is positive, all the iterations for coding the image f have been carried out.

In this embodiment, the different aspects of source block selection and determination of the transformations are identical to those described for the preceding embodiments.

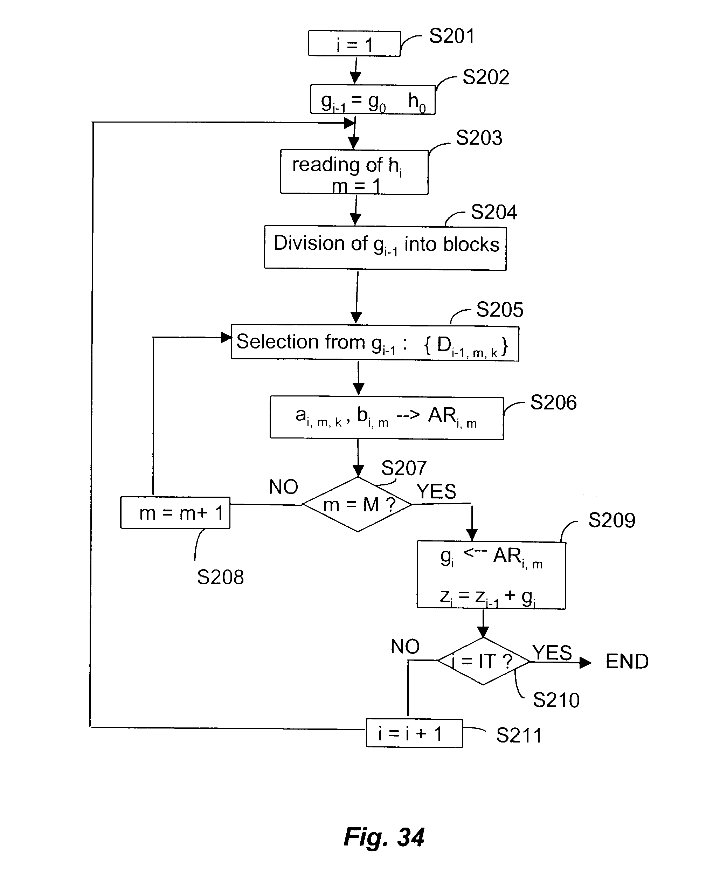

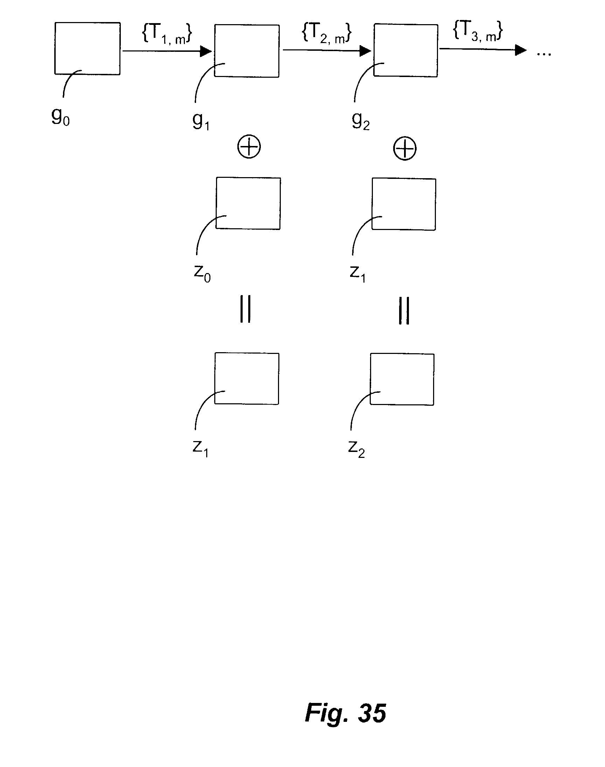

The decoding method corresponding to the coding of Figure 31 is depicted in **Figures 34 and 35** and consists of steps S201 to S211 stored in memory 53 of the device 5 (Figure 4).

The step S201 is an initialisation at which the parameter i is initialised to 1, for the first decoding iteration.

At the following step S202, a supplementary image $g_0$ is considered as a source image for the first decoding iteration. The supplementary image $g_0$ is identical to the one considered at the step S105 described previously, and is for example a uniformly black image. The compressed mean image $h_0$ is considered.

The following step S203 is the reading of the compressed file $h_i$, and initialisation of the parameter m to 1, in order to consider the first block to be reconstructed. The blocks are preferably processed in the same order as at compression, which avoids having to store and process an index, or coordinates, in order to identify the blocks.

The following step S204 is division of the reference image $g_{i-1}$ into blocks of adjacent pixels, which are the source blocks stored in memory 55. The step S204 is identical to the step S107. The following step S205 is the selection of source blocks $D_{i-1,m,1}$ to $D_{i-1,m,K}$ from the reference image $g_{i-1}$, with regard to the block to be reconstructed $AR_{i,m}$ of the image to be decompressed $g_i$. The reference image is determined in the same way as for coding. The source blocks are selected in the same way as for coding, with the same possible variants.

The step S205 is followed by the step S206 at which the transformation $T_{i,m}$ defined by the parameters $a_{i,m,k}$ and $b_{i,m}$ is applied to the source blocks $D_{i-1,m,1}$ to $D_{i-1,m,K}$ selected at the preceding step S205, according to the formula:

$$AR_{i,m} = \Sigma_k ( a_{i,m,k} \times D_{i-1,m,k} ) + b_{i,m}.$$

The result of the step S206 is the decompressed block $AR_{i,m}$ stored in memory 55.

The following step S207 is a test to determine whether the block which has just been decompressed is the last in the image in the process of decompression. If this is not the case, the step S207 is followed by the step S208 at which the parameter m is incremented by one unit in order to consider the next block. The step S208 is followed by the step S205 described previously.

When all blocks of the current image have been decompressed, the step S207 is followed by the step S209 at which the decompressed image $g_i$ is reconstructed from the blocks $AR_{i,m}$. The approximation $z_i$ of the image at the iteration i is determined by adding the image $g_i$ to the approximation $z_{i-1}$ determined at the preceding iteration. The approximation $z_i$ is for example displayed on a screen, and/or stored. In general, the step S209 is the transfer of the image $z_i$ to the user means 6.

The following step S210 is a test to determine whether all the iterations have been performed. If there remains at least one iteration to be performed, the step S210 is followed by the step S211 at which the parameter i is incremented by one unit, in order to move to the next iteration. The step S211 is followed by the step S203 described previously.

Thus the image $z_1$ is reconstructed first of all, then the image $z_2$, and so on, as depicted in Figure 35, which enables a progressive construction of the decoded image, each iteration making it possible to obtain an image having more detail than at the preceding iteration.

The invention has been described for grey-level images, that is to say images with a single component; it applies also to colour images having conventionally three components.

These components are conventionally the red, green and blue components, or luminance and chrominance components. Each of these components is processed as exposed for an image with a single component.

Naturally, the present invention is in no way limited to the embodiments described and depicted but, quite the contrary, encompasses any variant within the capability of persons skilled in the art.

**Claims**

1. Method of coding a set of data representing physical quantities, the said set being composed of sub-sets $(f_n)$,

   characterised in that it includes, for each of the sub-sets, the steps of:

   - dividing (E2) the sub-set into blocks of data to be coded $(A_{n,m})$,
   - dividing (E6) at least one reference set $(g_{n-1})$ into source blocks,
     then, for each of the blocks of data to be coded, the steps of:

     - selecting (E7) a predetermined number of source blocks $(D_{n-1,m,1}, D_{n-1,m,K})$ in the said at least one reference sub-set,
     - determining (E8) a transformation $(T_{n,m})$ between the source blocks selected and the block to be coded.

2. Method of coding a set of data representing physical quantities, the said set being composed of sub-sets $(f_n)$,

   characterised in that it includes, for each of the sub-sets, the steps of:

   - dividing (E401) the sub-set into zones $(Z_{n,1}$ to $Z_{n,E})$,
   - determining (E402) the type of each zone, amongst a first type of zone and a second type of zone, according to a zone criterion,
   - dividing (E407) each zone of the second type into blocks of data to be coded $(A_{n,m})$,
   - dividing (E407) at least one reference set $(g_{n-1})$ into source blocks,
     then, for each of the blocks of data to be coded, the steps of:

     - selecting (E407) a predetermined number of source blocks $(D_{n-1,m,1}, D_{n-1,m,K})$ in the said at least one reference set,
     - determining (E407) a transformation $(T_{n,m})$ between the source blocks selected and the block to be coded.

3. Coding method according to Claim 2, characterised in that it includes the calculation (E406) of a second distance between each zone and a corresponding zone in an adjacent sub-set, in that the zone criterion consists of comparing this distance with a threshold, and in that, if this distance is below the threshold, the zone under consideration if of a first type, and of a second type otherwise.

4. Method of coding a set of data representing physical quantities, the said set being composed of sub-sets $(f_n)$,

   characterised in that it includes, for each of the sub-sets, the steps of:

   - dividing (E52) the sub-set into blocks of data to be coded,
   - dividing (E56) at least one reference set $(g_{n-1})$ into source blocks,
     then, for each of the blocks of data to be coded, the steps of:

     - matching (E57) the block to be coded with one of the source blocks, and, if a matching criterion is not satisfied (E58),
     - selecting (E60) a predetermined number of source blocks $(D_{n-1,m,1}, D_{n-1,m,K})$ in the said at least one reference set,
     - determining (E61) a transformation between the source blocks selected and the block to be coded.

5. Method of coding a set (f) of data representing physical quantities,

   characterised in that it includes the step of:

   - dividing (S2) the set into blocks of data to be coded $(A_m)$,

     then the following steps, carried out iteratively a predetermined number of times:

   - constructing (S4, S14) a reference set $(g_{i-1})$,
   - dividing (S6) the reference set $(g_{i-1})$ into source blocks,
     and, for each block of data to be coded:

     - selecting (S7) a predetermined number of source blocks $(D_{i-1,m,1}, D_{i-1,m,K})$ from the said reference set,
     - determining (S8) a transformation $(T_{i,m})$ between the selected source blocks and the block to be coded.

6. Coding method according to Claim 5, characterised in that it also includes the step of transmitting the transformation determined for each data block.

7. Method of coding a set (f) of data representing physical quantities,

   characterised in that it includes the step of :

   - dividing (S52) the set into blocks of data to be coded,

     then the following steps, carried out iteratively a predetermined number of times :

   - constructing (S54, S66) a reference set $(g_{i-1})$,

- dividing (S56) the reference set ($g_{i-1}$) into source blocks,
  and, for each block of data to be coded :

  - matching (S57) of the block to be coded with one of the source blocks, and, if a matching criterion is not satisfied (S58),
  - selecting (S60) a predetermined number of source blocks ($D_{i-1,m,1}$ , $D_{i-1,m,K}$) from the said reference set,
  - determining (S61) a transformation between the selected source blocks and the block to be coded.

8. Coding method according to Claim 7, characterised in that it also includes the step of transmitting, for each data block, either the indication that the block is coded by block matching, or the transformation determined for the data block.

9. Coding method according to Claim 4, 7 or 8, characterised in that the matching criterion of the matching step includes a measurement of a first distance between the block to be coded ($A_{n,m}$ , $A_m$) and the source block ($D_{n-1,m,j}$ , $D_{i-1,m,j}$).

10. Method of coding a set (f) of data representing physical quantities,
   characterised in that it includes the following steps, carried out iteratively a predetermined number of times :

   - constructing (S103, S114) a set of data to be coded ($f'_i$),
   - dividing (S104, S115) the set into blocks of data to be coded ($A_m$),
   - constructing (S105, S114) a reference set ($g_{i-1}$),
   - dividing (S107) the reference set ($g_{i-1}$) into source blocks,
     and, for each block of data to be coded :

     - selecting (S108) a predetermined number of source blocks ($D_{i-1,m,1}$ , $D_{i-1,m,K}$) from the said reference set,
     - determining (S109) a transformation ($T_{i,m}$) between the selected source blocks and the block to be coded.

11. Coding method according to Claim 10, characterised in that the step of constructing a set of data to be coded includes, at the first iteration, the subtraction of a mean of the set of data representing physical quantities from the said set of data representing physical quantities.

12. Coding method according to Claim 10, characterised in that the step of constructing a set of data to be coded includes, from the second iteration, the subtraction of the set to be coded at the preceding iteration from a set of data reconstructed from the transformations determined at the preceding iteration.

13. Coding method according to any one of Claims 1 to 12, characterised in that the transformation minimises a third distance ($d(A_{nm}, AR_{n,m})$) between the block to be coded ($A_{n,m}$) and its approximation calculated by applying the transformation to the source blocks selected ($D_{n-1,m,1}$ , $D_{n-1,m,K}$).

14. Coding method according to any one of Claims 1 to 13, characterised in that the transformation is a multilinear approximation.

15. Coding method according to any one of Claims 1 to 13, characterised in that the transformation is a multilinear approximation combined with a geometric transformation.

16. Coding method according to any one of Claims 1 to 13, characterised in that the transformation is a polynomial on the values of the coefficients of the source blocks.

17. Coding method according to any one of Claims 13 to 16, characterised in that the calculation of the third distance includes the calculation of a difference between the values of the data of the block to be coded and the values of its approximation calculated by applying the transformation to the source blocks.

18. Coding method according to any one of Claims 13 to 17, characterised in that the third distance is the root mean square error calculated between the values of the block to be coded ($A_{n,m}$) and the values of the block resulting from the application of the transformation to the source blocks ($D_{n-1,m,1}$ to $D_{n-1,m,K}$).

19. Coding method according to any one of Claims 1 to 18, characterised in that, for the first sub-set to be coded, the said at least one reference set ($g_0$) is a predetermined set.

20. Coding method according to any one of Claims 1 to 18, characterised in that the said at least one reference set is a sub-set of the set.

21. Coding method according to any one of Claims 1 to 18, characterised in that the said at least one reference set is a sub-set ($g_{n-1}$) of the set, which was previously coded and then decoded.

22. Coding method according to any one of Claims 5 to 18, characterised in that, for the first iteration for coding the set to be coded, the said at least one reference set ($g_0$) is a predetermined set.

23. Coding method according to any one of Claims 5 to 18, characterised in that, from the second iteration, the said at least one reference set is the set ($g_{i-1}$) which was previously coded and then decoded at the preceding iteration.

24. Coding method according to any one of Claims 1 to 4, characterised in that at least two reference sets are considered, at least a first one of which is situated amongst the sub-sets preceding the sub-set in the course of coding and at least a second one of which is situated amongst the sub-sets following the sub-set in the course of coding.

25. Coding method according to any one of Claims 1 to 24, characterised in that the source blocks ($D_{n-1,m,1}$, $D_{n-1,m,K}$) are selected from a part of the reference set ($g_{n-1}$) which depends on the part where the block to be coded ($A_{n,m}$) is situated in the set in the process of coding ($f_n$).

26. Coding method according to any one of Claims 1 to 25, characterised in that the source blocks ($D_{n-1,m,1}$, $D_{n-1,m,K}$) have a size which is determined according to the size of the block to be coded ($A_{n,m}$).

27. Coding method according to any one of Claims 1 to 26, characterised in that the source blocks ($D_{n-1,m,1}$, $D_{n-1,m,K}$) have a size which is a multiple by a factor $F^2$ of that of the block to be coded ($A_{n,m}$) and are sub-sampled by the factor F, where F is an integer.

28. Coding method according to any one of Claims 1 to 26, characterised in that the source blocks ($D_{n-1,m,1}$, $D_{n-1,m,K}$) have the same size as the block to be coded ($A_{n,m}$).

29. Coding method according to any one of Claims 1 to 28, characterised in that the block to be coded ($A_{n,m}$) is of predetermined size.

30. Coding method according to any one of Claims 5 to 28, characterised in that the size of the block to be coded ($A_m$) decreases with the iterations.

31. Coding method according to any one of Claims 1 to 29, characterised in that the block to be coded ($A_{n,m}$) is of variable size, according to a size criterion.

32. Coding method according to Claim 31, characterised in that it includes the calculation (E38) of a fourth distance between the block to be coded and the approximation calculated by applying the transformation to the source blocks, in that the size criterion consists of comparing (E39) the fourth distance with a threshold, and in that, if the fourth distance is above the threshold, and if a minimum block size has not been attained, the block in the course of coding is divided (E47) into blocks of lower size.

33. Method of decoding a set of data representing physical quantities, the set being composed of sub-sets ($h_n$) which each include coded representations of blocks of data, each of the blocks being coded by means of a transformation ($T_{n,m}$) between source blocks selected from at least one reference sub-set and the block,

   characterised in that it includes, for each of the blocks of each of the sub-sets to be decoded, the step (E25) of applying the transformation to the source blocks in order to decode the block ($AR_{n,m}$).

34. Method of decoding a set of data representing physical quantities, the set being composed of sub-sets ($h_n$) which each include coded representations of data blocks,

   characterised in that it includes, for each block of each of the sub-sets to be decoded, the steps of:

   - testing (E74) as to whether the block is coded by block matching,

     and, in the case of a negative reply, the block then being coded by means of a transformation ($T_{n,m}$) between source blocks selected from at least one reference sub-set and the block :

   - applying (E77) the transformation to the source blocks in order to decode the block.

35. Method of decoding a set of coded data representing physical quantities, the set of data being coded by a series of coding sets ($h_i$) which each consist of coded representations of data blocks ($T_{i,m}$), each block being coded by means of a transformation ($T_{i,m}$) between source blocks selected from a reference set and the block,

   characterised in that it includes, for each coding set successively and for each block, the step of applying (S25) the transformation to the source blocks in order to decode the block ($AR_{i,m}$).

36. Method of decoding a set of coded data representing physical quantities, the set of data being coded by a series of coding sets ($h_i$) which each consist of coded representations of data blocks ($T_{i,m}$),

   characterised in that it includes, for each coding set successively and for each block, the steps of:

- testing (S74) as to whether the block is coded by block matching,

and, in the case of a negative reply, the block then being coded by means of a transformation ($T_{i,m}$) between source blocks selected from a reference set and the block :

- applying (S77) the transformation to the source blocks in order to decode the block.

37. Decoding method according to Claim 34 or 36, characterised in that, in the case of a positive reply at the testing step, the block is decoded by copying a matching block determined by the block matching.

38. Decoding method according to Claim 35 or 36, characterised in that it also includes, for the first iteration, the addition of a mean ($h_0$) to the set resulting from application of the transformation to the source blocks for each of the blocks.

39. Decoding method according to Claim 35 or 36, characterised in that it also includes, from the second iteration, the addition of the set resulting from the decoding at the preceding iteration and the set resulting from application of the transformation to the source block for each of the blocks.

40. Decoding method according to any one of Claims 35 to 39, characterised in that it includes the reading (E220, E270) of the size and position of the blocks to be decoded.

41. Method of decoding a set of data representing physical quantities, the set being composed of sub-sets ($h_n$) which each include coded representations of zones belonging to a first or a second type of zone, the coded representations of the second type of zone being produced by blocks of data, characterised in that it includes, for each of the blocks of the zones of the second type of each of the sub-sets to be decoded, the step (E525) of applying the transformation to the source blocks in order to decode the block.

42. Device for coding (2) a set of data representing physical quantities, the said set being composed of sub-sets ($f_n$), characterised in that it has (24):

- means of dividing the sub-sets ($f_n$) into blocks of data to be coded ($A_{n,m}$),
- means of dividing at least one reference sub-set ($g_{n-1}$) into source blocks, for each of the sub-sets,
- means of selecting a predetermined number of source blocks ($D_{n-1,m,1}$, $D_{n-1,m,K}$) from the said at least one reference sub-set ($g_{n-1}$), for each of the blocks of data to be coded ($A_{n,m}$) in each of the sub-sets ($f_n$), and
- means of determining a transformation ($T_{n,m}$) between the selected source blocks and the block to be coded.

43. Device for coding (2) a set of data representing physical quantities, the said set being composed of sub-sets ($f_n$), characterised in that it has (24):

- means of dividing the sub-sets into blocks of data to be coded ($A_{n,m}$),
- means of dividing at least one reference sub-set ($g_{n-1}$) into source blocks, for each of the sub-sets,
- means of matching, for each of the blocks of data to be coded, the block to be coded with one of the source blocks, and, if a matching criterion is not satisfied,
- means of selecting a predetermined number of source blocks ($D_{n-1,m,1}$, $D_{n-1,m,K}$) from the said at least one reference sub-set, for each of the blocks of data to be coded in each of the sub-sets, and
- means of determining a transformation ($T_{n,m}$) between the selected source blocks and the block to be coded.

44. Device for coding (2) a set of data representing physical quantities, the said set being composed of sub-sets ($f_n$), characterised in that it has (24):

- means of dividing the sub-set into zones ($Z_{n,1}$ to $Z_{n,E}$),
- means of determining the type of each zone, from a first type of zone and a second type of zone, according to a zone criterion,
- means of dividing each zone of the second type into blocks of data to be coded ($A_{n,m}$),
- means of dividing at least one reference sub-set ($g_{n-1}$) into source blocks,
- means of selecting a predetermined number of source blocks ($D_{n-1,m,1}$, $D_{n-1,m,K}$) from the said at least one reference sub-set, for each of the blocks of data in the zones of the second type in the sub-sets, and
- means of determining a transformation ($T_{n,m}$) between the selected source blocks and the block to be coded.

45. Coding device according to any one of Claims 42 to 44, characterised in that the division, selection and determination means are incorporated in:

- a controller (24),

- a read only memory (23) including a program for coding each of the blocks of data, and
- a random access memory (25) including registers adapted to record variables modified during the running of the said program.

46. Device for coding (2) a set (f) of data representing physical quantities,
    characterised in that it has (24) :

- means of dividing the set (f) into blocks of data to be coded ($A_m$),
- means of constructing a reference set ($g_{i-1}$),
- means of dividing the reference set ($g_{i-1}$) into source blocks,
- means of selecting a predetermined number of source blocks ($D_{i-1,m,1}$, $D_{i-1,m,K}$) from one reference set ($g_{i-1}$), for each block of data to be coded ($A_m$), and
- means of determining a transformation ($T_{i,m}$) between the selected source blocks and the block to be coded.

47. Coding device (2) according to Claim 46, characterised in that it has means of transmitting (3) the transformation determined for each block to be coded.

48. Device for coding (2) a set (f) of data representing physical quantities,
    characterised in that it has (24):

- means of dividing the set into blocks of data to be coded ($A_m$),
- means of constructing a reference set ($g_{n-1}$),
- means of dividing the reference set ($g_{n-1}$) into source blocks,
- means of matching, for each block of data to be coded, the block to be coded with one of the source blocks, and, if a matching criterion is not satisfied,
- means of selecting a predetermined number of source blocks ($D_{n-1,m,1}$, $D_{n-1,m,K}$) from one reference set, for each data block, and
- means of determining a transformation ($T_{n,m}$) between the selected source blocks and the block to be coded.

49. Coding device (2) according to Claim 48, characterised in that it has means of transmitting (3), for each block to be coded, either the indication that the block is coded by block matching, or the transformation determined for the data block.

50. Coding device (2) according to any one of Claims 46 to 49, characterised in that it also has means of constructing a set of data to be coded ($f'_n$).

51. Coding device according to any one of Claims 46 to 50, characterised in that the division, construction, selection and determination means are incorporated in :

- a microcontroller (24),
- a read-only memory (23) having a program to code each data block, and
- a random access memory (25) having registers adapted to record variables modified during execution of the said program.

52. Device (5) for decoding a set of data representing physical quantities, the set being composed of sub-sets ($h_n$) which include each of coded representations of blocks of data, each of the blocks being coded by means of a transformation between source blocks selected from a reference sub-set ($g_{n-1}$) and the block,
    characterised in that it includes means (54) of applying the transformation to the source blocks, for each of the blocks of each of the sub-sets to be decoded.

53. Device for decoding (5) a set of data representing physical quantities, the set being composed of sub-sets ($h_n$) which each include coded representations of data blocks,
    characterised in that it has (54) :

- means of testing, for each of the blocks ($A_{n,m}$), of each of the sub-sets to be decoded, as to whether the block is coded by block matching,

    and in the case of a negative reply, the block then being coded by means of a transformation ($T_{n,m}$) between source blocks selected from a reference set and the block :

- means of applying the transformation to the source blocks in order to reconstruct the block ($AR_{n,m}$).

54. Decoding device according to Claim 52 or 53, characterised in that it includes means of reading the size and position of the blocks to be decoded.

55. Device for decoding a set of data representing physical quantities, the set being composed of sub-sets ($h_n$) which each include coded representations of zones belonging to a first or a second type of zone, the coded representations of the second type of zone being produced by blocks of data,
    characterised in that it includes means of applying the transformation to the source blocks, for each of the blocks of the zones of the second type of each of the sub-sets to be decoded.

56. Decoding device according to any one of Claims 52 to 55, characterised in that the application means are incorporated in :

- a controller (54),
- a read-only memory (53) including a program for decoding each data block, and
- a random access memory (55) including registers adapted to record variables modified during the running of the said program.

57. Digital device including means adapted to implement the coding method according to any one of Claims 1 to 32.

58. Digital device including means adapted to implement the decoding method according to any one of Claims 33 to 41.

59. Digital device including the coding device according to any one of Claims 42 to 51.

60. Digital device including the decoding device according to any one of Claims 52 to 56.

61. Storage medium storing a program for coding a set of data representing physical quantities, the said set being composed of sub-sets $(f_n)$,
said program including, for each of the sub-sets, the steps of :

- dividing (E2) the sub-set into blocks of data to be coded $(A_{n,m})$,
- dividing (E6) at least one reference set $(g_{n-1})$ into source blocks,
then, for each of the blocks of data to be coded, the steps of:

- selecting (E7) a predetermined number of source blocks $(D_{n-1,m,1}, D_{n-1,m,K})$ in the said at least one reference sub-set,
- determining (E8) a transformation $(T_{n,m})$ between the source blocks selected and the block to be coded.

62. Storage medium storing a program for coding a set (f) of data representing physical quantities,
said program including the steps of:

- dividing (S2) the set into blocks of data to be coded $(A_m)$,

then the following steps, carried out iteratively a predetermined number of times:

- constructing (S4, S14) a reference set $(g_{i-1})$,
- dividing (S6) the reference set $(g_{i-1})$ into source blocks,
and, for each block of data to be coded:

- selecting (S7) a predetermined number of source blocks $(D_{i-1,m,1}, D_{i-1,m,K})$ from the said reference set,
- determining (S8) a transformation $(T_{i,m})$ between the selected source blocks and the block to be coded.

63. Storage medium storing a program for decoding a set of data representing physical quantities, the set being composed of sub-sets $(h_n)$ which each include coded representations of blocks of data, each of the blocks being coded by means of a transformation $(T_{n,m})$ between source blocks selected from at least one reference sub-set and the block,
said program including, for each of the blocks of each of the sub-sets to be decoded, the step (E25) of applying the transformation to the source blocks in order to decode the block $(AR_{n,m})$.

64. Storage medium storing a program for decoding a set (f) of coded data representing physical quantities, the set of data being coded by a series of coding sets $(h_i)$ which each consist of coded representations of data blocks $(T_{i,m})$, each block being coded by means of a transformation $(T_{i,m})$ between source blocks selected from a reference set and the block,
said program including, for each coding set successively and for each block, the step of applying (S25) the transformation to the source blocks in order to decode the block $(AR_{i,m})$.

65. Storage medium according to claim 61, characterised in that said storage medium is detachably mountable on a device for coding (2) a set of data representing physical quantities, the said set being composed of sub-sets $(f_n)$, having (24):

- means of dividing the sub-sets $(f_n)$ into blocks of data to be coded $(A_{n,m})$,
- means of dividing at least one reference subset $(g_{n-1})$ into source blocks, for each of the sub-sets,
- means of selecting a predetermined number of source blocks $(D_{n-1,m,1}, D_{n-1,m,K})$ from the said at least one reference sub-set $(g_{n-1})$, for each of the blocks of data to be coded $(A_{n,m})$ in each of the sub-sets $(f_n)$, and
- means of determining a transformation $(T_{n,m})$ between the selected source blocks and the block to be coded.

66. Storage medium according to claim 62, characterised in that said storage medium is detachably mountable on a data coding device for coding (2) a set (f) of data representing physical quantities, having (24) :

- means of dividing the set (f) into blocks of data to be coded ($A_m$),

- means of constructing a reference set ($g_{i-1}$),
- means of dividing the reference set ($g_{i-1}$) into source blocks,
- means of selecting a predetermined number of source blocks ($D_{i-1,m,1}$ , $D_{i-1,m,K}$) from one reference set ($g_{i-1}$), for each block of data to be coded ($A_m$), and
- means of determining a transformation ($T_{i,m}$) between the selected source blocks and the block to be coded.

67. Storage medium according to claim 63, characterised in that said storage medium is detachably mountable on a device for decoding a set of data representing physical quantities, the set being composed of sub-sets ($h_n$) which include each of coded representations of blocks of data, each of the blocks being coded by means of a transformation between source blocks selected from a reference sub-set ($g_{n-1}$) and the block,

characterised in that it includes means (54) of applying the transformation to the source blocks, for each of the blocks of each of the sub-sets to be decoded.

68. Storage medium according to any one of claims 62 to 67, characterised in that said storage medium is a floppy disk or a CD-ROM.

22    27

| Source of uncoded data | → | Coding device | → | Coded data user means |

1            2            3

**Fig. 1**

52    57

| Coded data user means | → | Decoding device | → | Decoded data user means |

4            5            6

**Fig. 2**

**Fig. 3**

Fig. 4

**Fig. 5**

$A_{n,1}$

128 pixels

$f_n$

96 pixels

32 pixels

32 pixels

$A_{n,12}$

**Fig. 6**

$f_n$

16 pixels

16 pixels    32 pixels

**Fig. 7**

$D_{n-1, m, 1}$    $A_{n,m}$    $D_{n-1, m, 2}$

$D_{n-1, m, 3}$    $D_{n-1, m, 4}$

**Fig. 8a**

$D_{n-1, m, 1}$    $D_{n-1, m, 2}$

$A_{n,m}$    $D_{n-1, m, 4}$

$D_{n-1, m, 3}$

**Fig. 8b**

$D_{n-1, m, 1}$    $D_{n-1, m, 2}$    $A_{n,m}$

$D_{n-1, m, 3}$    $D_{n-1, m, 4}$

**Fig. 8c**

$A_{n,m}$    $D_{n-1, m, 2}$

$D_{n-1, m, 1}$    $D_{n-1, m, 4}$

$D_{n-1, m, 3}$

**Fig. 8d**

$D_{n-1, m, 1}$    $A_{n,m}$    $D_{n-1, m, 2}$

$D_{n-1, m, 3}$    $D_{n-1, m, 4}$

**Fig. 8e**

$D_{n-1, m, 1}$    $D_{n-1, m, 2}$

$A_{n,m}$    $D_{n-1, m, 4}$

$D_{n-1, m, 3}$

**Fig. 8f**

Fig. 9

n = 1 — E31

Division of the image $f_n$ into blocks $A_{n,m}$ of initial size — E32

Multilinear approximation
$T_{n,m}$    $d\,(\,A_{n,m}\,,\,AR_{n,m})$ — E33

E34

YES    $d\,(\,A_{n,m}\,,\,AR_{n,m})<\;S$    NO

?

E40

YES    Minimum
size
?

Decoding of block
storage    $T_{n,m}$ — E35

E37

Following block

NO

E36

Last block
of the image $f_n$
?

NO

E39

Following image

NO

E38

Last image
in the sequence
?

YES

FIN

*Fig. 10*

E41

Division into sub-blocks
$A_{n,m}^{1}$    à    $A_{n,m}^{M_1}$

YES

33

$A^3_{n,3}$  $A^1_{n,3}$  $A^2_{n,3}$

128 pixels

$A^4_{n,3}$

96 pixels

$A^{4,1}_{n,6}$  $A^{4,3}_{n,6}$  $A^{4,4}_{n,6}$  $A^{4,2}_{n,6}$

*Fig. 11*

$A_{n,1}$ $A_{n,2}$ $A_{n,3}$ $A_{n,4}$ $A_{n,5}$ $A_{n,6}$ $A_{n,7}$ $A_{n,8}$ $A_{n,9}$ $A_{n,10}$ $A_{n,11}$ $A_{n,12}$

0    0    1    0    0    1    0    0    0    0    0    0

D    D         D    D         D    D    D    D    D    D

0  0  0  0        0  0  0

D  D  D  D        D  D  D

1

0  0  0  0

D  D  D  D

*Fig. 12*

n = 1 — E200

$g_{n-1} = g_0$ — E210

First block - Reading of tree — E220

Division of $g_{n-1}$ into blocks — E230

Selection from $g_{n-1}$ : { $D_{n-1, m, k}$ } — E240

$a_{n, m, k}$ , $b_{n,m}$ / $D_{n-1, m, k}$ --> $AR_{n, m}$ — E250

E260

NO — last block ? — YES

E270 — Following block reading of tree

E280 — $AR_{n, m}$ --> $g_n$

E290

NO — n = N ? — YES — END

n = n + 1 — E300

**Fig. 13**

$n = 1$ — E51

Division of the image
$f_n$ into blocks $A_{n,1}$ to $A_{n,M}$ — E52

E53 — $n = 1$ ? — YES — $g_{n-1} = g_0$ — E54

NO

$m = 1$ — E55

Division of $g_{n-1}$ into blocks — E56

Matching of block $A_{n,m}$ — E57

E58 — criterion ?

YES — Storage to memory $V_{n,m,j}$ , $I_{n,m}$ — E59

NO — Selection from $g_{n-1}$ : $\{ D_{n-1,m,k} \}$ — E60

$T_{n,m} = \sum_k a_{n,m,k} * D_{n-1,m,k} + b_{n,m}$ — E61

Storage to memory $T_{n,m} = (a_{n,m,k} , b_{n,m})$ $I_{n,m}$ — E62

E63 — $m = M$ ?

NO — $m = m + 1$ — E65

YES — E64 — $n = N$ ?

NO — $a_{n,m,k}$ , $b_{n,m}$ --> $AR_{n,m}$ --> $g_n$ — E66

YES — END

$n = n + 1$ — E67

*Fig. 14*

*Fig. 15*

**Fig. 16**

$f_n$

$Z_{n,1}$

$Z_{n,2}$

$Z_{n,3}$

$Z_{n,4}$

$Z_{n,5}$

**Fig. 17**

n = 1 — E520

decoding $g_1$
n = 2 — E521

e = 1 — E522

E523

movable
zone?

NO        YES

E524

Zone
decoded ?

YES        NO

E525

Copy

E526

Decoding

E527

$T_{n,m}$ / $D_{n-1,m,k}$

--> $AR_{n,m}$

E528

NO    e = E ?    YES

E529

e = e + 1

E530

$g_n$

E531

NO    n = N ?    YES    END

E532

n = n + 1

**Fig. 18**

**Fig. 19**

EP 0 891 100 A1

Fig. 20

Fig. 25

42

$A_1$

f

$A_{12}$

**Fig. 21**

f

**Fig. 22**

$D_{i-1, m, 1}$    $A_{i,m}$    $D_{i-1, m, 2}$

$D_{i-1, m, 3}$    $D_{i-1, m, 4}$

**Fig. 23a**

$D_{i-1, m, 1}$    $A_{i,m}$    $D_{i-1, m, 2}$

$D_{i-1, m, 3}$    $D_{i-1, m, 4}$

**Fig. 23b**

$D_{i-1, m, 1}$    $D_{i-1, m, 2}$    $A_{i,m}$

$D_{i-1, m, 3}$    $D_{i-1, m, 4}$

**Fig. 23c**

$D_{i-1, m, 1}$    $A_{i,m}$    $D_{i-1, m, 2}$

$D_{i-1, m, 3}$    $D_{i-1, m, 4}$

**Fig. 23d**

$D_{i-1, m, 1}$    $A_{i,m}$    $D_{i-1, m, 2}$

$D_{i-1, m, 3}$    $D_{i-1, m, 4}$

**Fig. 23e**

$D_{i-1, m, 1}$    $A_{i,m}$    $D_{i-1, m, 2}$

$D_{i-1, m, 3}$    $D_{i-1, m, 4}$

**Fig. 23f**

i = 1 — S20

$g_{i-1} = g_0$ — S21

reading of $h_i$    m = 1 — S22

Division of $g_{i-1}$ into blocks — S23

Selection from $g_{i-1}$ : { $D_{i-1,m,k}$ } — S24

$a_{i,m,k}$ , $b_{i,m}$ / $D_{i-1,m,k}$ --> $AR_{i,m}$ — S25

S26

NO ← m = M ? → YES

S27

m = m + 1

S28

$AR_{i,m}$ --> $g_i$

S29

NO ← i = IT ? → YES → END

S30

i = i + 1

*Fig. 24*

f, M, IT    i = 1 — S31

Division of the image
f into blocks of size $t_i$ — S32

S33

i = 1 ? — YES → $g_{i-1} = g_0$ — S34

NO

first block — S35

Division of $g_{i-1}$ into blocks — S36

Selection from $g_{i-1}$ : $\{ D_{i-1, m, k} \}$ — S37

$T_{i,m} = \Sigma_k a_{i,m,k} * D_{i-1, m, k} + b_{i,m}$ — S38

$d ( A_{i,m} , AR_{i,m})$

Storage    :    $T_{i,m} = \{ a_{i,m,k} , b_{i,m} \}$ — S39

S40

NO — last block ? — YES

S41

next block

transmission — S42

S43

NO — n = N ? — YES → END

$a_{i,m,k} , b_{i,m}$  -->  $AR_{i,m}$  -->  $g_i$ — S44

i = i + 1 — S45

## Fig. 26

32x32 pixels

$\{T_{1,m}\}$

f

16x16 pixels

$\{T_{2,m}\}$

$\{T_{3,m}\}$

8x8 pixels

4x4 pixels

$\{T_{1,m}\}$

$\{T_{2,m}\}$

$\{T_{3,m}\}$

$g_0$

$g_1$

$g_2$

$g_3$

...

**Fig. 27**

$\{T_{1,m}\}$

$\{T_{2,m}\}$

$g_0$

$g_1$

$g_2$

...

**Fig. 28**

**Fig. 29**

S51 — f, M, IT

S52 — division of the image f into blocks $A_1$ à $A_M$

S53 — i = 1

S54 — $g_{i-1} = g_0$

S55 — m = 1

S56 — Division of $g_{i-1}$ into blocks

S57 — $I_{i-1,m} = 1$ ? — YES / NO

S58 — $I_{i,m} = I_{i-1,m}$

S60 — block matching

S61 — criterion — YES / NO

S62 — Selection from $g_{i-1}$ : $\{ D_{i-1,m,k} \}$

S63 — $T_{i,m} = \sum_k a_{i,m,k} * D_{i-1,m,k} + b_{i,m}$

S64 — storage : $T_{i,m} = (a_{i,m,k}, b_{i,m})$ $I_{i,m}$

S59 — storage $I_{i,m}$

S65 — m = M ? — NO / YES

S66 — m = m+ 1

S67 — transmission $h_i$

S68 — n = N ? — NO / YES → END

S69 — $a_{i,m,k}, b_{i,m} \rightarrow AR_{i,m} \rightarrow g_i$

S691 — i = i + 1

S70 — i = 1

S71 — $g_{i-1} = g_0$

S72 — reading of $h_i$   m = 1

S73 — Division of $g_{i-1}$ into blocks

S74 — $AR_{i,m}$ coded by block matching ?

YES

S75 — read of the source block --> $AR_{i,m}$

NO

S76 — Selection from $g_{i-1}$ :  { $D_{i-1, m, k}$ }

S77 — $a_{i,m,k}$ , $b_{i,m}$  /  $D_{i-1, m, k}$  --> $AR_{i,m}$

S78 — last block ?

NO

S79 — next block reading of size of the block

YES

S80 — $AR_{i,m}$ -->  $g_i$

S90 — i = IT ?

NO

YES — END

S91 — i = i + 1

**Fig. 30**

49

**Fig. 31**

**Fig. 32**

**Fig. 33**

$i = 1$ — S201

$g_{i-1} = g_0 \quad h_0$ — S202

reading of $h_i$
$m = 1$ — S203

Division of $g_{i-1}$ into blocks — S204

Selection from $g_{i-1}$ : $\{ D_{i-1, m, k} \}$ — S205

$a_{i, m, k}$ , $b_{i, m}$ --> $AR_{i, m}$ — S206

S207

NO      $m = M$ ?      YES

$m = m+1$

S208

S209

$g_i$ <-- $AR_{i, m}$

$z_i = z_{i-1} + g_i$

NO      $i = IT$ ?      YES → END

S210

$i = i + 1$ — S211

**Fig. 34**

$\{T_{1,m}\}$ $\{T_{2,m}\}$ $\{T_{3,m}\}$ ...

$g_0$ $g_1$ $g_2$

$\oplus$ $\oplus$

$z_0$ $z_1$

$\|$ $\|$

$z_1$ $z_2$

**Fig. 35**

## EUROPEAN SEARCH REPORT

European Patent
Office

Application Number

EP 98 40 1708

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GHARAVI-ALKHANSARI M ET AL: "FRACTAL-BASED TECHNIQUES FOR A GENERALIZED IMAGE CODING METHOD" PROCEEDINGS OF THE INTERNATIONAL CONFERENCE ON IMAGE PROCESSING (IC, AUSTIN, NOV. 13 - 16, 1994, vol. 3, 13 November 1994, pages 122-126, XP000572262 INSTITUTE OF ELECTRICAL AND ELECTRONICS ENGINEERS * abstract * * paragraph 1 * | 1,5,6, 10, 12-29, 33,35, 39,42, 46,47, 52,57-68 | H04N7/26 H04N7/36 H04N7/30 |
| A | * paragraph 2 * | | |
| X | EP 0 749 245 A (ALCATEL ITALIA ;ALCATEL NV (NL)) 18 December 1996 | 1,5,6, 10,12, 13, 17-27, 29,31, 33,35, 39,42, 46,47, 52,57-68 | |
| | | | TECHNICAL FIELDS SEARCHED (Int.Cl.6) |
| | * page 2, line 48 - line 53 * * page 3, line 14 - line 55 * | | H04N |
| A | * page 4, line 26 - line 42 * | | |

-/--

The present search report has been drawn up for all claims

| Place of search | Date of completion of the search | Examiner |
|---|---|---|
| THE HAGUE | 30 September 1998 | Berbain, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

## EUROPEAN SEARCH REPORT

Application Number

EP 98 40 1708

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.6) |
| X | ANDONOVA S ET AL: "VIDEO CODING USING FRACTAL-BASED IMAGE COMPRESSION" PROCEEDINGS OF THE INTERNATIONAL CONFERENCE ON SYSTEMS, MAN, AND CYBERNETICS, SAN ANTONIO, OCT. 2 - 5, 1994, vol. 1 OF 3, 2 October 1994, pages 343-348, XP000530699 INSTITUTE OF ELECTRICAL AND ELECTRONICS ENGINEERS | 1,13-21, 25-27, 29,33, 42,52, 57-68 | |
| Y | * the whole document * | 2,3,31, 32,41, 44,55 | |
| A | | | |
| | --- | | |
| X | US 5 416 856 A (JACOBS EVERETT W ET AL) 16 May 1995 | 1,5,6, 10,12, 13, 17-27, 31,33, 35,39, 42,46, 47,52, 57,68 | |
| | | | TECHNICAL FIELDS SEARCHED (Int.Cl.6) |
| Y | * abstract * | 31,32 | |
| A | * column 7, line 11 - line 48 * | | |
| | --- | | |
| Y | EP 0 248 711 A (GUICHARD JACQUES ;EUDE GERARD (FR)) 9 December 1987 * abstract * | 2,3,41, 44,55 | |
| | --- | | |
| | -/-- | | |

The present search report has been drawn up for all claims

| Place of search | Date of completion of the search | Examiner |
|---|---|---|
| THE HAGUE | 30 September 1998 | Berbain, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 98 40 1708

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | LEPSOY S ET AL: "ATTRACTOR IMAGE COMPRESSION WITH A FAST NON-ITERATIVE DECODING ALGORITHM" IMAGE AND MULTIDIMENSIONAL SIGNAL PROCESSING, MINNEAPOLIS, APR. 27 - 30, 1993, vol. 5 OF 5, 27 April 1993, pages V-337-V-340, XP000437679 INSTITUTE OF ELECTRICAL AND ELECTRONICS ENGINEERS * the whole document * | 1-68 | |
| A | JACQUIN A E: "IMAGE CODING BASED ON A FRACTAL THEORY OF ITERATED CONTRACTIVE IMAGE TRANSFORMATIONS" IEEE TRANSACTIONS ON IMAGE PROCESSING, vol. 1, no. 1, 1 January 1992, pages 18-30, XP000367530 * abstract * * paragraph I * * paragraph IV * | 1-68 | TECHNICAL FIELDS SEARCHED (Int.Cl.6) |

The present search report has been drawn up for all claims

| Place of search | Date of completion of the search | Examiner |
|---|---|---|
| THE HAGUE | 30 September 1998 | Berbain, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)